# EUROPÄISCHE PATENTSCHRIFT

(11) **EP 4 313 730 B1**
(45) Veröffentlichungstag und Bekanntmachung des Hinweises auf die Patenterteilung: **13.05.2026**
(21) Anmeldenummer: 22719805.8
(22) Anmeldetag: 23.03.2022
(51) Int. Cl.: B62D 11/14, B60K 1/02, B60K 6/48

(54) **LENKANTRIEBSSYSTEM FÜR EIN RADSEITENGELENKTES FAHRZEUG, RADSEITENGELENKTES FAHRZEUG UND VERFAHREN ZUM BETREIBEN DESSELBEN**
STEERING DRIVE SYSTEM FOR A VEHICLE WITH WHEEL-BASED STEERING, VEHICLE WITH WHEEL-BASED STEERING AND METHOD FOR THE OPERATION THEREOF
SYSTÈME D'ENTRAÎNEMENT DE DIRECTION POUR VÉHICULE À ROUES DIRECTRICES, VÉHICULE À ROUES DIRECTRICES ET PROCÉDÉ DE FONCTIONNEMENT DE CELUI-CI

(30) Priorität: 24.03.2021 DE 102021107419
(43) Veröffentlichungstag der Anmeldung: 07.02.2024
(60) Teilanmeldung: 25197458.0
(73) Patentinhaber: RENK GmbH, 86159 Augsburg (DE)
(72) Erfinder: MÜLLER, Nikolaus, 80636 München (DE); PFÄNDER, Marcel, 81671 München (DE); HARSCHER, Mario, 86159 Augsburg (DE)
(74) Vertreter: Schlotter, Alexander Carolus Paul
(86) Internationale Anmeldenummer: PCT/EP2022/057663
(87) Internationale Veröffentlichungsnummer: WO 2022/200449

(56) Entgegenhaltungen:
- EP-A1- 1 650 109
- DE-A1- 102020 204 217

## Beschreibung

Die Erfindung betrifft ein Lenkantriebssystem für ein radseitengelenktes Fahrzeug, insbesondere eines radseitengelenkten Fahrzeugs. Des Weiteren betrifft die Erfindung ein radseitengelenktes Fahrzeug und ein Verfahren zum Betreiben desselben.

Ein radseitengelenktes Fahrzeug, wie zum Beispiel ein Gleiskettenfahrzeug, verfügt über ein Fahrantriebssystem sowie über ein Lenkantriebssystem.

Das Fahrantriebssystem eines radseitengelenkten Fahrzeugs verfügt über mindestens ein Antriebsaggregat und ein Fahrgetriebe, um an Abtrieben des radseitengelenkten Fahrzeugs, die zu beiden Seiten des Fahrzeugs positioniert sind, insbesondere für eine Geradeausfahrt des radseitengelenkten Fahrzeugs Antriebsleistung und eine Grunddrehzahl bereitzustellen.

Bei dynamischen radseitengelenkten Fahrzeugen wird typischerweise eine Überlagerungslenkung verwendet, bei der eine jeweilige Radseite des radseitengelenkten Fahrzeugs mit einer Überlagerungsdrehzahl kreuzweise angetrieben wird, um über ein Differentialmoment eine Lenkbewegung zu bewirken. Vorzugsweise werden die Überlagerungen kreuzweise über ein Koppelelement bzw. -glied verbunden, um Lenkenergie aus der translatorischen Bewegung des Fahrzeugs zurückzugewinnen. Dieses Koppelelement bzw. -glied kann als eine sogenannte Nullwelle ausgeführt sein, die bei Geradeausfahrt steht und bei Lenkbewegungen beide Radseiten wechselseitig überlagert.

Um ein radseitengelenktes Fahrzeug mit Nullwelle zu lenken, muss die Nullwelle drehen. Über die Nullwelle kann dann an den Abtrieben der Grunddrehzahl der Abtriebe eine Überlagerungsdrehzahl überlagert werden, die an einer ersten Seite des radseitengelenkten Fahrzeugs die Grunddrehzahl erhöht und an einer gegenüberliegenden zweiten Seite des radseitengelenkten Fahrzeugs die Grunddrehzahl verringert. Hierdurch ist dann ein Lenken des radseitengelenkten Fahrzeugs möglich.

Aus der DE 10 2009 016 639 A1 ist ein Lenkantriebssystem eines radseitengelenkten Fahrzeugs und ein mit dem Lenkantriebssystem ausgerüstetes radseitengelenktes Fahrzeug bekannt. So sind Antriebe gezeigt, die in ein Summiergetriebe eintreiben. Das Summiergetriebe steht über eine Stirnradstufe mit einer Nullwelle in Wirkverbindung. Die Nullwelle stellt für die beiden Seiten des radseitengelenkten Fahrzeugs die jeweilige Überlagerungsdrehzahl bereit, die einer von einer Antriebsmaschine bereitgestellten Grunddrehzahl zur Lenkung überlagert wird.

Aus der DE 102 746 870 B3 ist ein weiteres radseitengelenktes Fahrzeug mit einem Lenkantriebssystem bekannt. Die Nullwelle des Lenkantriebssystems ist durch eine Kombination aus einem von einem Fahrantriebssystem abgezweigten Leistungsanteil und einem Leistungsanteil mindestens eines Elektromotors antreibbar, wobei der Elektromotor mit mehreren voneinander unabhängigen Stromkreisen ausgebildet ist. Zur Übertragung des vom Fahrantriebssystem abgezweigten Leistungsanteils dient eine hydrodynamische Lenkungskupplung oder eine mechanisch regelbare lastschaltbare Kupplung.

Weitere radseitengelenkte Fahrzeuge sind aus der DE 10 2005 035 824 A1 und aus der DE 103 14 956 B4 bekannt.

Das Dokument EP 1 650 109 A1 offenbart ein Hybridantriebssystem für Fahrzeuge mit Rad- oder Raupenfahrwerk und Schlupfsteuerung.

Es besteht Bedarf an einem Lenkantriebssystem für ein bzw. eines radseitengelenkten Fahrzeugs, welches einen einfachen Aufbau aufweist und/oder einen zuverlässigen Betrieb des radseitengelenkten Fahrzeugs ermöglicht.

Ferner besteht Bedarf an einem radseitengelenkten Fahrzeug mit einem solchen Lenkantriebssystem sowie an einem Verfahren zum Betreiben des radseitengelenkten Fahrzeugs.

Hiervon ausgehend liegt der vorliegenden Erfindung die Aufgabe zugrunde, ein neuartiges Lenkantriebssystem für ein radseitengelenktes Fahrzeug bzw. eines radseitengelenkten Fahrzeugs, ein radseitengelenktes Fahrzeug mit einem solchen Lenkantriebssystem und ein Verfahren zum Betreiben desselben zu schaffen.

Diese Aufgabe wird insbesondere durch ein Lenkantriebssystem nach Anspruch 1 bzw. ein radseitengelenktes Fahrzeug nach Anspruch 10 bzw. Verfahren nach Ansprüchen 12 bis 15 gelöst.

Das erfindungsgemäße Lenkantriebssystem weist ein Koppelelement bzw. -glied auf, welches mit Abtrieben des Fahrzeugs koppelbar, in einer Ausführung gekoppelt, ist, um dann, wenn ein Betrag einer Überlagerungsdrehzahl des Koppelelements größer als Null ist, an den Abtrieben, die ausgehend von einem Fahrantriebssystem des Fahrzeugs mit einer Grunddrehzahl angetrieben sind, zur Lenkung des Fahrzeugs eine der Grunddrehzahl zu überlagernde Überlagerungsdrehzahl bereitzustellen. Koppelelement und Koppelglied sind vorzugsweise synonym.

Das erfindungsgemäße Lenkantriebssystem weist ferner mindestens eine erste elektrische Maschine, deren Drehzahl variabel einstellbar oder regelbar ist, und eine Leistungssummations- und/oder Leistungsverzweigungseinheit auf.

Ein erster, insbesondere ein- oder mehrgliedriger, in einer Ausführung ein- oder mehrsträngiger, Anschluss der Leistungssummations- und/oder Leistungsverzweigungseinheit, der in einer Ausführung einen (ersten) Eingang der Leistungssummations- und/oder Leistungsverzweigungseinheit bildet, ist an eine Welle gekoppelt, die, in einer Ausführung über ein definiertes Übersetzungsverhältnis, mit einer Welle des Fahrantriebssystems koppelbar, in einer Ausführung gekoppelt, ist. In einer Ausführung wird das definierte Übersetzungsverhältnis von einer Hauptleistungsverzweigungseinheit bereitgestellt, in einer Weiterbildung von einer Hauptleistungsverzweigungseinheit, die dazu eingerichtet ist, eine Antriebsleistung, insbesondere wenigstens temporär ganz oder teilweise, in das Fahrgetriebe und/oder, insbesondere wenigstens temporär ganz oder teilweise, in das Lenkantriebssystem zu leiten, bzw. die eine Antriebsleistung in einer Ausführung wie genannt leitet. In einer Ausführung ist die Welle des Lenkantriebssystems über eine bzw. die Hauptleistungsverzweigungseinheit des Fahrgetriebes mit der Welle des Fahrantriebssystems koppelbar, in einer Ausführung gekoppelt. Die Hauptleistungsverzweigungseinheit kann insbesondere auf einer Welle angeordnet sein, auf der die Überlagerungsgetriebe der Abtriebe angeordnet und/oder gelagert sind. Das Lenkantriebssystem kann insbesondere dazu eingerichtet sein, Leistung über einen primären Leistungseintrieb zu erhalten.

In einer Weiterbildung erhält das Lenkantriebssystem Leistung über einen primären Leistungseintrieb bzw. ist dieses hierzu eingerichtet. Der primäre Leistungseintrieb kann insbesondere eine Leistung, insbesondere zumindest einen Teil einer Leistung einer weiteren elektrischen Maschine und/oder eines Antriebsaggregats erhalten und eine entsprechende Leistung an das Lenkantriebssystem abgeben bzw. dazu eingerichtet sein. Die Leistung des Antriebsaggregats und/oder dieser weiteren elektrischen Maschine kann insbesondere über eine bzw. die Hauptleistungsverzweigungseinheit an das Fahrgetriebe, insbesondere über ein Anfahrelement, und an den primären Leistungseintrieb verzweigt werden. Das Antriebsaggregat weist in einer Ausführung eine Brennkraftmaschine auf, kann insbesondere eine solche sein.

Ein zweiter, insbesondere ein- oder mehrgliedriger, in einer Ausführung ein- oder mehrsträngiger, Anschluss der Leistungssummations- und/oder Leistungsverzweigungseinheit, der in einer Ausführung einen (zweiten), vorzugsweise variablen, Eingang der Leistungssummations- und/oder Leistungsverzweigungseinheit bildet, ist, in einer Ausführung direkt bzw. drehzahlgleich oder in einer anderen Ausführung über ein (gegebenenfalls weiteres) definiertes Übersetzungsverhältnis, an die mindestens eine erste elektrische Maschine gekoppelt, wobei dieses Übersetzungsverhältnis vorzugsweise ungleich Eins (und ungleich Null) ist.

Ein dritter, insbesondere ein- oder mehrgliedriger, in einer Ausführung ein- oder mehrsträngiger, Anschluss der Leistungssummations- und/oder Leistungsverzweigungseinheit, der in einer Ausführung einen Ausgang der Leistungssummations- und/oder Leistungsverzweigungseinheit bildet, ist, in einer Ausführung über wenigstens ein (gegebenenfalls weiteres) definiertes Übersetzungsverhältnis, in einer Weiterbildung alternativ jeweils über eines von mehreren verschiedenen, insbesondere gegensinnigen, (weiteren) definierten Übersetzungsverhältnissen, an das Koppelelement gekoppelt.

Das erfindungsgemäße Lenkantriebssystem verfügt über die Leistungssummations- und/oder Leistungsverzweigungseinheit, deren erster Anschluss mit derjenigen Welle gekoppelt ist, die, insbesondere über ein definiertes Übersetzungsverhältnis, mit einer Welle des Fahrantriebssystems gekoppelt bzw. hierzu ausgebildet ist, deren zweiter Anschluss an die mindestens eine erste elektrische Maschine gekoppelt ist, und deren dritter Anschluss, insbesondere über ein weiteres definiertes Übersetzungsverhältnis, gegebenenfalls alternativ über eines von mehreren verschiedenen weiteren definierten Übersetzungsverhältnissen, an das Koppelelement gekoppelt ist.

In einer Ausführung lässt sich die Drehzahl der mindestens einen ersten elektrischen Maschine präzise regeln. Durch diese Regelung ist die Übertragungsfunktion für die Lenkung wählbar. So kann vorteilhaft eine verlustarme, stufenlose Lenkung, vorzugsweise über den gesamten Lenk- und Fahrbereich, bereitgestellt werden. Zur Ansteuerung der Überlagerungsdrehzahl werden in einer Ausführung keine mechanischen Kräfte benötigt. So kann in einer Ausführung ein, vorzugsweise komplett mechanisch entkoppeltes, Steuerungskonzept im Sinne eines "Steer-By-Wire Konzepts" bereitgestellt werden.

Nach einer Weiterbildung ist an diejenige Welle, an welche der erste Anschluss der Leistungssummations- und/oder Leistungsverzweigungseinheit gekoppelt ist, mindestens eine zweite elektrische Maschine gekoppelt, in einer Ausführung direkt bzw. drehzahlgleich oder in einer anderen Ausführung über ein definiertes Übersetzungsverhältnis, das vorzugsweise ungleich Eins (und ungleich Null) ist. Über die mindestens eine zweite elektrische Maschine, die an diejenige Welle gekoppelt ist, an welche der erste Anschluss der Leistungssummations- und/oder Leistungsverzweigungseinheit gekoppelt ist, kann ein Lenkantriebssystem bereitgestellt werden, welches unabhängig von einer sekundären Energiequelle, insbesondere einer fahrzeugseitigen Traktionsbatterie oder eines zweiten Leistungserzeugers, arbeitet.

**In** einer Ausführung weist das Lenkantriebssystem mindestens eine elektrische Maschine auf, die (wenigstens temporär generatorisch bzw. als Generator bzw.) in einem generatorischen Betrieb (betrieben wird und dabei) die, in einer Ausführung dabei motorisch bzw. als Motor bzw. in einem motorischen Betrieb betriebene, mindestens eine erste elektrische Maschine, in einer Ausführung direkt oder über einen Energiespeicher, mit elektrischer Energie versorgt, und/oder (wenigstens temporär motorisch betrieben bzw. als Motor bzw.) in einem motorischen Betrieb (betrieben und dabei) von der mindestens einen, in einer Ausführung generatorisch bzw. als Generator bzw. in einem generatorischen Betrieb betriebenen, ersten elektrischen Maschine, in einer Ausführung direkt oder über einen Energiespeicher, mit elektrischer Energie versorgt wird bzw. die dazu ausgebildet ist und die in einer Ausführung eine hier genannte zweite elektrische Maschine, die an das Koppelelement oder an diejenige Welle gekoppelt ist, an welche auch der erste Anschluss der Leistungssummations- und/oder Leistungsverzweigungseinheit gekoppelt ist, eine hier genannte weitere elektrische Maschine, die in einer Ausführung an die Welle des Fahrantriebssystems gekoppelt ist, oder auch eine andere elektrische Maschine sein kann.

Dadurch kann in einer Ausführung vorteilhaft kinetische Energie des Fahrzeugs genutzt und/oder ein elektrischer Energiespeicher, insbesondere eine (fahrzeugseitige) Traktionsbatterie, zur Versorgung der ersten elektrischen Maschine reduziert oder eingespart werden.

In einer Ausführung ist mindestens eine hier genannte zweite elektrische Maschine an einem äußeren Ende derjenigen Welle, an welche auch der erste Anschluss der Leistungssummations- und/oder Leistungsverzweigungseinheit gekoppelt ist, bzw. einem äußeren Ende des Koppelelements angeordnet. Dadurch kann in einer Ausführung deren Zugänglichkeit, insbesondere zu Wartungszwecken, verbessert werden. Zusätzlich oder alternativ sind in einer Ausführung die mindestens eine erste elektrische Maschine und mindestens eine hier genannte zweite elektrische Maschine, die an diejenige Welle gekoppelt ist, an welche auch der erste Anschluss der Leistungssummations- und/oder Leistungsverzweigungseinheit gekoppelt ist, koaxial zueinander und/oder auf einander gegenüberliegenden Seite der Leistungssummations- und/oder Leistungsverzweigungseinheit angeordnet. Dadurch kann in einer Ausführung Bauraum, Zugänglichkeit, insbesondere Wartbarkeit, und/oder Kraftübertragung verbessert werden.

Nach einer Weiterbildung ist parallel zur Leistungssummations- und/oder Leistungsverzweigungseinheit eine Leistungseinheit geschaltet, die ausgebildet ist, die Welle, an welche auch der erste Anschluss der Leistungssummations- und/oder Leistungsverzweigungseinheit gekoppelt ist, parallel zur Leistungssummations- und/oder Leistungsverzweigungseinheit, insbesondere schlupfend, an das Koppelelement zu koppeln. Insbesondere dann, wenn die parallel zur Leistungssummations- und/oder Leistungsverzweigungseinheit geschaltete Leistungseinheit von einer hydrodynamischen Kupplung bereitgestellt ist, kann mit Hilfe dieser Weiterbildung eine hohe Leistungsdichte bereitgestellt werden.

In einer Ausführung ist diese Leistungseinheit ausgebildet, die Welle, an welche auch der erste Anschluss der Leistungssummations- und/oder Leistungsverzweigungseinheit gekoppelt ist, parallel zur Leistungssummations- und/oder Leistungsverzweigungseinheit in einem Betriebszustand der Leistungseinheit mit einer Drehrichtung und in einem anderen Betriebszustand der Leistungseinheit mit einer hierzu entgegengesetzten bzw. umgekehrten Drehrichtung an das Koppelelement zu koppeln.

Hierzu ist in einer Ausführung eine Drehrichtungsumkehreinrichtung vorgesehen, die in einer Weiterbildung wenigstens eine an das Koppelelement gekoppelte Räderspur, die in dem einen Betriebszustand der Leistungseinheit bzw. in einem Betriebszustand der Drehrichtungsumkehreinrichtung durch die Welle (an welche auch der erste Anschluss der Leistungssummations- und/oder Leistungsverzweigungseinheit gekoppelt ist) angetrieben wird und das Koppelelement mit einer Drehrichtung dreht und in dem anderen Betriebszustand der Leistungseinheit bzw. in einem anderen Betriebszustand der Drehrichtungsumkehreinrichtung durch die Welle angetrieben wird und das Koppelelement mit einer zu dieser vorgenannten Drehrichtung entgegengesetzten bzw. umgekehrten Drehrichtung dreht bzw. hierzu ausgebildet ist, und in einer anderen Weiterbildung wenigstens zwei an das Koppelelement koppelbare, insbesondere gekoppelte, Räderspuren aufweist, von denen in dem einen Betriebszustand der Leistungseinheit bzw. in einem Betriebszustand der Drehrichtungsumkehreinrichtung die eine Räderspur die Welle, an welche auch der erste Anschluss der Leistungssummations- und/oder Leistungsverzweigungseinheit gekoppelt ist, mit einer Drehrichtung an das Koppelelement koppelt, und in dem anderen Betriebszustand der Leistungseinheit bzw. in einem anderen Betriebszustand der Drehrichtungsumkehreinrichtung die andere Räderspur die Welle, an welche auch der erste Anschluss der Leistungssummations- und/oder Leistungsverzweigungseinheit gekoppelt ist, mit einer hierzu entgegengesetzten bzw. umgekehrten Drehrichtung an das Koppelelement koppelt bzw. die hierzu ausgebildet sind.

Nach einer Weiterbildung ist, in einer Ausführung zwischen der ersten elektrischen Maschine und dem zweiten Anschluss der Leistungssummations- und/oder Leistungsverzweigungseinheit, eine Leistungseinheit angeordnet bzw. vorgesehen, die ausgebildet ist, die Welle, an welche auch der erste Anschluss der Leistungssummations- und/oder Leistungsverzweigungseinheit gekoppelt ist, parallel zur ersten elektrischen Maschine, insbesondere schlupfend, an die Leistungssummations- und/oder Leistungsverzweigungseinheit, in einer Ausführung an deren zweiten bzw. variablen Anschluss, zu koppeln. Hierdurch können in einer Ausführung bei kompakter(er) Bauform ähnliche Vorteile erzielt werden wie bei einer parallel zur Leistungssummations- und/oder Leistungsverzweigungseinheit geschalteten Leistungseinheit.

Eine hier genannte Leistungseinheit weist in einer Ausführung eine schaltbare Reibkupplung, insbesondere Lamellen- oder hydrodynamische Kupplung auf. Hierdurch kann diese in einer Ausführung Leistung besonders vorteilhaft übertragen.

In einer Ausführung überträgt die Leistungseinheit wenigstens 50% einer, insbesondere über den primären Leistungseintrieb, in das Lenkantriebssystem übertragenen Leistung, weiter insbesondere wenigstens 60% oder wenigstens 70% und/oder höchstens 90%, insbesondere höchstens 80%, höchstens 75% oder höchstens 70%, der Leistung, insbesondere direkt, an das Koppelelement und die Leistungssummations- und/oder Leistungsverzweigungseinheit überträgt (zumindest im Wesentlichen) den Rest an das Koppelelement, insbesondere durch einen dritten Anschluss der Leistungssummations- und/oder Leistungsverzweigungseinheit. Hierdurch kann in einer Ausführung die erste elektrische Maschine, insbesondere auch die zweite elektrische Maschine, kleiner ausgelegt werden, insbesondere kleiner ausgebildet sein als insbesondere eine elektrische Maschine, die die gesamte in das Lenkantriebssystem eingebrachte Leistung ergänzt oder verringert, insbesondere in einem generatorischen oder motorischen Betrieb der (ersten oder zweiten) elektrischen Maschine. Hierdurch kann in einer Ausführung eine Feineinstellung der Drehzahl des Koppelelements, insbesondere über die erste elektrische Maschine, erfolgen.

Nach einer Weiterbildung ist die Leistungssummations- und/oder Leistungsverzweigungseinheit ausgebildet, um in einem mindestens ersten Betriebszustand derselben den ersten Anschluss und den zweiten Anschluss in einem Überlagerungsbetrieb an den dritten Anschluss zu koppeln, und in einer Ausführung ausgebildet, um in mindestens einem zweiten Betriebszustand den ersten Anschluss und/oder den zweiten Anschluss in einem Festübersetzungsbetrieb, vorzugsweise beide, in einem festen Übersetzungsverhältnis an den dritten Anschluss zu koppeln. Durch die Wahl des Betriebszustands der Leistungssummations- und/oder Leistungsverzweigungseinheit kann in Kombination in einer Ausführung mit der Drehzahlregelung der mindestens einen ersten elektrischen Maschine eine verlustarme und/oder stufenlose Lenkung, vorzugsweise über den gesamten Lenk- und Fahrbereich, besonders vorteilhaft bereitgestellt werden.

In einer Ausführung ist die Leistungssummations- und/oder Leistungsverzweigungseinheit ausgebildet, um in einem ersten Betriebszustand derselben den ersten Anschluss und den zweiten Anschluss in einem (ersten) Überlagerungsbetrieb an den dritten Anschluss zu koppeln, in dem eine Drehzahl des dritten Anschlusses bei gleicher Drehzahl des ersten Anschlusses durch Variation der Drehzahl des zweiten Anschlusses variiert werden kann, der daher auch als variabler Eingang bezeichnet wird.

In einer Weiterbildung ist die Leistungssummations- und/oder Leistungsverzweigungseinheit ausgebildet, um den ersten Anschluss und den zweiten Anschluss in wenigstens einem weiteren Überlagerungsbetrieb, in dem eine Drehzahl des dritten Anschlusses bei gleicher Drehzahl des ersten Anschlusses durch Variation der Drehzahl des zweiten Anschlusses variiert werden kann, an den dritten Anschluss derart zu koppeln, dass eine in dem ersten und dem weiteren Überlagerungsbetrieb gleiche Drehzahl des ersten Anschlusses und eine in dem ersten und dem weiteren Überlagerungsbetrieb gleiche Drehzahl des zweiten Anschlusses in dem ersten und dem weiteren Überlagerungsbetrieb unterschiedliche Drehzahlen, in einer Ausführung Drehzahlen mit unterschiedlichen Beträgen, des dritten Anschlusses bewirken.

In einer Ausführung ist die Leistungssummations- und/oder Leistungsverzweigungseinheit ausgebildet, um in einem zweiten Betriebszustand in einem (ersten) Festübersetzungsbetrieb den ersten Anschluss in einem (ersten) festen Übersetzungsverhältnis an den dritten Anschluss zu koppeln und/oder den zweiten Anschluss in einem (zweiten) festen Übersetzungsverhältnis an den dritten Anschluss zu koppeln.

In einer Weiterbildung ist die Leistungssummations- und/oder Leistungsverzweigungseinheit ausgebildet, um in wenigstens einem weiteren Festübersetzungsbetrieb den ersten Anschluss in einem von dem ersten festen Übersetzungsverhältnis, in einer Ausführung betragsmäßig, verschiedenen weiteren festen Übersetzungsverhältnis an den dritten Anschluss zu koppeln und/oder den zweiten Anschluss in einem von dem zweiten festen Übersetzungsverhältnis, in einer Ausführung betragsmäßig, verschiedenen weiteren festen Übersetzungsverhältnis an den dritten Anschluss zu koppeln.

In einer Ausführung umfasst bzw. umschreibt ein Festübersetzungsbetrieb den Fall, dass der zweite Anschluss lastfrei sein bzw. stehen kann bzw. steht, insbesondere festgesetzt werden kann bzw. ist, so dass zwischen dem ersten Anschluss und dem dritten Anschluss ein festes Übersetzungsverhältnis eingestellt ist bzw. werden kann.

Wenn beispielsweise, wie nachfolgend noch erörtert, in Fig. 4 Schaltelement 68 oder in Fig. 5 Schaltelement 80 oder in Fig. 6 Schaltelement 97 geschlossen ist, wird (auch) dies in einer Ausführung als Festübersetzungsbetrieb bezeichnet, in dem (auch) der zweite Anschluss 25b in einem Festübersetzungsbetrieb und/oder in einem festen Übersetzungsverhältnis an den dritten Anschluss 25c gekoppelt sind.

In einer Ausführung ist die Leistungssummations- und/oder Leistungsverzweigungseinheit ausgebildet, um in wenigstens einem, vorzugsweise vorgenannten zweiten, Betriebszustand den ersten Anschluss, insbesondere wenigstens bei lastfreiem zweiten Anschluss, in einem festen Übersetzungsverhältnis bzw. derart an den dritten Anschluss zu koppeln, dass eine Drehung des ersten Anschlusses mit einer Drehzahl ungleich Null bei lastfreiem zweiten Anschluss in eine Drehung des dritten Anschlusses mit einer durch dieses feste Übersetzungsverhältnis bestimmten Drehzahl ungleich Null übersetzt wird. Dadurch kann in einer Ausführung eine feste Übersetzung zwischen erstem und drittem Anschluss eingestellt werden, sodass Leistung rein über den ersten Anschluss bereitgestellt wird und der zweite Anschluss lastlos ist bzw. keine Überlagerung mehr stattfindet, was vorteilhaft beispielsweise als Notbetrieb genutzt werden kann, falls etwa die erste elektrische Maschine ausfällt, und/oder um feste Lenkradien einzustellen und dadurch in einer Ausführung die erste elektrische Maschine zu schonen.

Gemäß der Erfindung weist die Leistungssummations- und/oder Leistungsverzweigungseinheit ein Wendegetriebe auf, welches ausgebildet ist, eine Drehrichtung des Koppelelements umzukehren, insbesondere bei gleicher Drehrichtung einer bzw. der Welle, an welche auch der erste Anschluss der Leistungssummations- und/oder Leistungsverzweigungseinheit gekoppelt ist, je nach Betriebszustand des Wendegetriebes entgegengesetzte Drehrichtungen des Koppelelements zu bewirken.

In einer Weiterbildung ist dieses Wendegetriebe in die Leistungssummations- und/oder Leistungsverzweigungseinheit integriert und in einer Ausführung ist wenigstens eine an das Koppelelement und die Leistungssummations- und/oder Leistungsverzweigungseinheit, insbesondere deren dritten Anschluss und/oder integriertes Wendegetriebe, gekoppelte Räderspur vorgesehen, die in einem Betriebszustand des Wendegetriebes mit einer Drehrichtung und in dem anderen Betriebszustand des Wendegetriebes mit einer hierzu entgegengesetzten bzw. umgekehrten Drehrichtung dreht und/oder die den dritten Anschluss, in einer Ausführung über ein bzw. das (weitere) definierte Übersetzungsverhältnis, an das Koppelelement koppelt bzw. hierzu ausgebildet ist.

In einer anderen Weiterbildung ist das Wendegetriebe zwischen Leistungssummations- und/oder Leistungsverzweigungseinheit und Koppelelement geschaltet und weist wenigstens zwei an das Koppelelement gekoppelte Räderspuren auf, von denen in einem Betriebszustand des Wendegetriebes die eine Räderspur das Koppelelement durch die Leistungssummations- und/oder Leistungsverzweigungseinheit mit einer Drehrichtung antreibt, und in einem anderen Betriebszustand des Wendegetriebes die andere Räderspur das Koppelelement durch die Leistungssummations- und/oder Leistungsverzweigungseinheit mit einer zu dieser vorgenannten Drehrichtung entgegengesetzten bzw. umgekehrten Drehrichtung antreibt bzw. die hierzu ausgebildet sind. In einer Ausführung koppeln die beiden Räderspuren die Leistungssummations- und/oder Leistungsverzweigungseinheit, vorzugsweise deren dritten Anschluss, alternativ und mit gegensinnigen Drehrichtungen an das Koppelelement bzw. sind hierzu ausgebildet.

Durch das integrierte Wendegetriebe kann in einer Ausführung die Anbindung an das Koppelelement vereinfacht werden, durch das zwischengeschaltete Wendegetriebe mit wenigstens zwei alternativ antreibenden Räderspuren in einer Ausführung die Leistungssummations- und/oder Leistungsverzweigungseinheit kompakt(er) ausgebildet werden.

Gemäß der Erfindung ist das Wendegetriebe nach einer Überlagerung der Leistung, die von der Welle, an die der erste Anschluss der Leistungssummations- und/oder Leistungsverzweigungseinheit gekoppelt ist, insbesondere von dem ersten Anschluss, bereitgestellt wird, mit der Leistung, die von der mindestens einen ersten elektrischen Maschine, insbesondere von dem zweiten Anschluss, bereitgestellt wird, angeordnet, in einer Ausführung in die Leistungssummations- und/oder Leistungsverzweigungseinheit integriert.

Durch die Anordnung des Wendegetriebe nach der Überlagerung bzw. Leistungssummation von Leistung von dem Fahrantriebssystem bzw. Antriebsaggregat mit Leistung von der mindestens einen ersten elektrischen Maschine, insbesondere nach der Leistungssummation von Leistung, die am ersten Anschluss und von Leistung, die am zweiten Anschluss der Leistungssummations- und/oder Leistungsverzweigungseinheit anliegt, kann in einer Ausführung der Betrieb der elektrischen Maschine verbessert werden, insbesondere, indem diese für beide Lenkrichtungen in derselben Richtung betrieben werden kann, insbesondere betrieben wird, und/oder eine Drehrichtungsumkehr, insbesondere ein Drehzahlsprung, bei Zuschalten der Leistung von dem Fahrantriebssystem bzw. Antriebsaggregat reduziert, vorzugsweise - wenigstens im Wesentlichen - vermieden werden kann, beispielsweise, wenn in einer Ausführung zunächst das Koppelelement nur durch Leistung von der ersten elektrischen Maschine angetrieben und später Leistung von dem Fahrantriebssystem bzw. Antriebsaggregat überlagert wird. In einer Ausführung mit einer Anordnung des Wendegetriebes nach der Überlagerung bzw. Leistungssummation ist ein Schaltvorgang der Leistungssummations- und/oder Leistungsverzweigungseinheit vorteilhafterweise ohne Umsynchronisierung der ersten elektrischen Maschine möglich bzw. es kann (hierdurch) vorteilhafterweise auf eine Umsynchronisierung der ersten elektrischen Maschine verzichtet werden. Dies trägt in einer Ausführung wesentlich zu einer besser kontrollierbaren Lenkbarkeit des Fahrzeugs bei.

In einer Ausführung mit einer Anordnung des Wendegetriebes nach der Überlagerung bzw. Leistungssummation, insbesondere von Leistung von dem Fahrantriebssystem bzw. Antriebsaggregat mit Leistung von der mindestens einen ersten elektrischen Maschine, können die Schaltelemente des Wendegetriebes, insbesondere alle Schaltelemente, welche normalerweise Antriebsleistung von der Leistungssummations- und/oder Leistungsverzweigungseinheit in einer jeweils entgegengesetzten Drehrichtung auf das Koppelelement übertragen, gleichzeitig geschlossen werden, bzw. gleichzeitig geschlossen sein. Hierdurch kann in einer Ausführung ermöglicht werden, dass durch das Verblocken beider entgegengesetzter Drehrichtungen das gesamte Wendegetriebe und in einer Ausführung somit auch das Koppelelement auf Null gebremst werden. Dies kann in einer Ausführung vorteilhafterweise eine kontrollierte(re) und exakte(re) Geradeausfahrt des Fahrzeugs ermöglichen.

Die Leistungssummations- und/oder Leistungsverzweigungseinheit des erfindungsgemäßen Lenkantriebssystems, insbesondere eines hier beschriebenen Lenkantriebssystems, weist in einer Ausführung einen oder mehrere, vorzugsweise mindestens und/oder höchstens vier, insbesondere höchstens sechs, Planetensätze und/oder ein oder mehrere, vorzugsweise mindestens und/oder höchstens drei, insbesondere höchstens fünf, Schaltelemente auf, wobei in einer Ausführung mindestens zwei Planetensätze und mindestens zwei Schaltelemente das in die Leistungssummations- und/oder Leistungsverzweigungseinheit integrierte Wendegetriebe bilden, und/oder und wobei mindestens zwei (gegebenenfalls weitere) Planetensätze und mindestens ein (gegebenenfalls weiteres) Schaltelement abhängig von der Schaltstellung des bzw. der Schaltelemente(s) an der Bereitstellung der unterschiedlichen Betriebszustände der Leistungssummations- und/oder Leistungsverzweigungseinheit beteiligt sind.

In einer Weiterbildung ist ein Schaltelement oder sind mehrere Schaltelemente, vorzugsweise alle Schaltelemente, als Bremse ausgebildet.

In einer Weiterbildung ist ein Schaltelement oder sind mehrere Schaltelemente, insbesondere alle Schaltelemente, als Kupplung ausgebildet.

In einer Weiterbildung sind zwei, vorzugsweise alternativ aktivierte bzw. sperrende, Schaltelemente dazu ausgebildet, alternativ eine der beiden Räderspuren der Drehrichtungsumkehreinrichtung zu aktivieren bzw. drehen. Zusätzlich oder alternativ sind in einer Weiterbildung zwei, vorzugsweise alternativ aktivierte bzw. sperrende, Schaltelemente des zwischen Leistungssummations- und/oder Leistungsverzweigungseinheit und Koppelelement geschalteten Wendegetriebes dazu ausgebildet, alternativ eine der beiden Räderspuren zu aktivieren bzw. zu drehen. Diese Schaltelemente können jeweils Bestandteil der Drehrichtungsumkehreinrichtung bzw. des Wendegetriebes sein.

Ein oder mehrere hier genannte Übersetzungsverhältnisse können in einer Ausführung (jeweils) stets ungleich Null und/oder ungleich eins sein, insbesondere, um die beiden gekoppelten Partner jeweils vorteilhaft(er), insbesondere in vorteilhaften Drehzahlbereichen, betreiben zu können. Ein festes Übersetzungsverhältnis kann in einer Ausführung auch gleich Null sein bzw. den Fall umfassen bzw. beschreiben, dass der zweite Anschluss der Leistungssummations- und/oder Leistungsverzweigungseinheit stehen kann, insbesondere steht.

Ein erfindungsgemäßes radseitengelenktes Fahrzeug ist insbesondere in Anspruch 21 definiert.

Erfindungsgemäße Verfahren zum Betreiben des erfindungsgemäßen, radseitengelenkten Fahrzeugs sind insbesondere in den Ansprüchen 24, 26, 27, 29 definiert.

Bevorzugte Weiterbildungen der Erfindung ergeben sich aus den Unteransprüchen und der nachfolgenden Beschreibung.

Ausführungsbeispiele der Erfindung werden an Hand der Zeichnung näher erläutert, ohne auf diese beschränkt zu sein. Dabei zeigt:

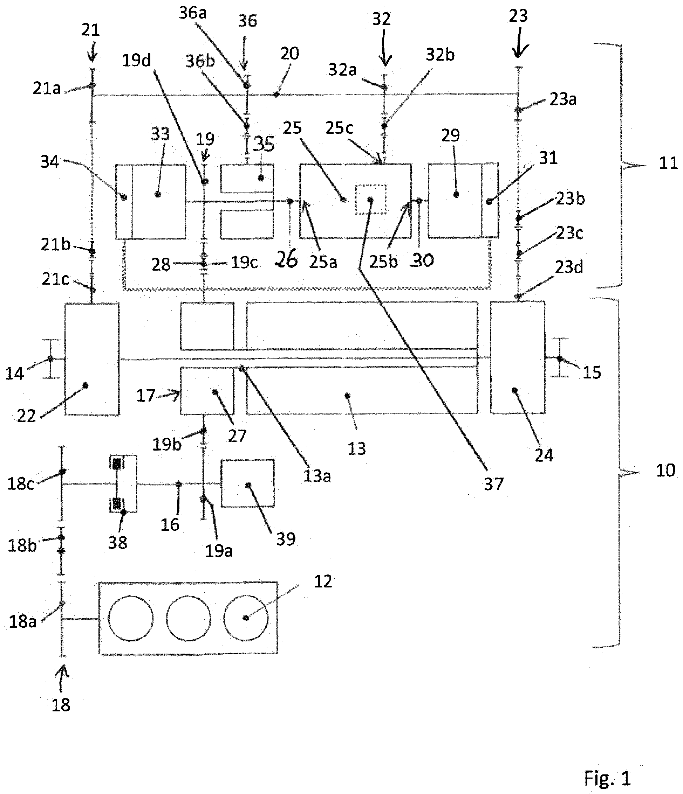

- Fig. 1: eine schematisierte Darstellung eines Lenkantriebssystems für ein bzw. eines radseitengelenkten Fahrzeugs zusammen mit einem Fahrantriebssystem des radseitengelenkten Fahrzeugs,

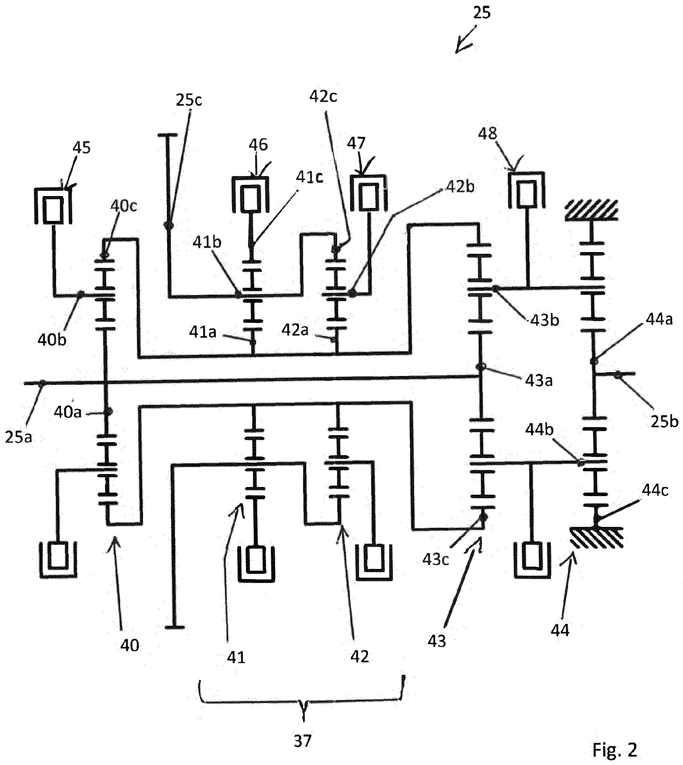

- Fig. 2: eine exemplarische Ausführung einer Leistungssummations- und/oder Leistungsverzweigungseinheit des Lenkantriebssystems der Fig. 1 oder 7 bis 11,

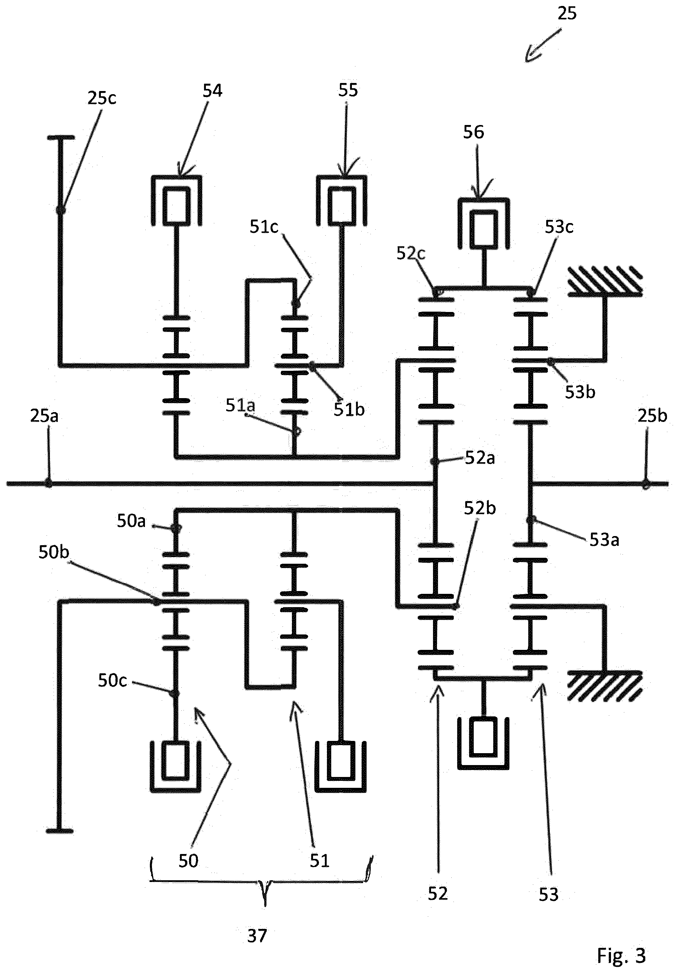

- Fig. 3: eine alternative Ausführung der Leistungssummations- und/oder Leistungsverzweigungseinheit des Lenkantriebssystems der Fig. 1 oder 7 bis 11,

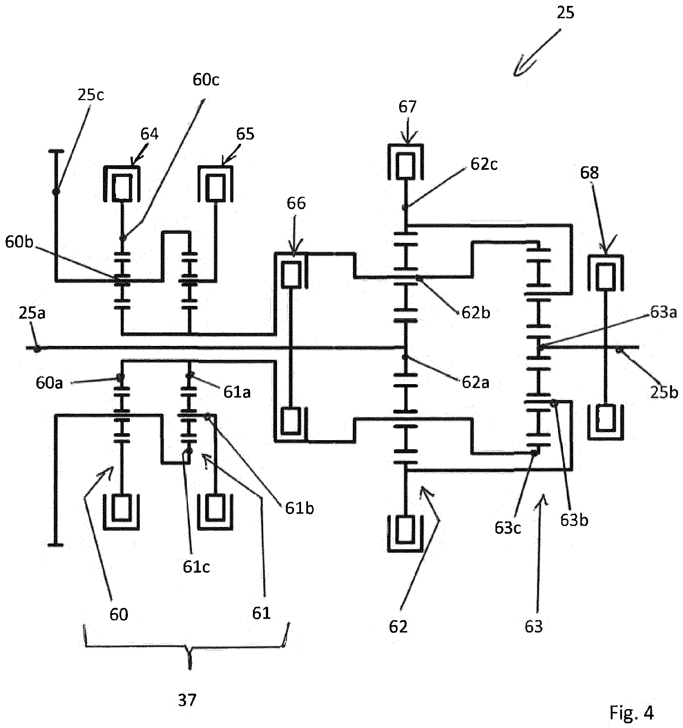

- Fig. 4: eine weitere alternative Ausführung der Leistungssummations- und/oder Leistungsverzweigungseinheit des Lenkantriebssystems der Fig. 1 oder 7 bis 11,

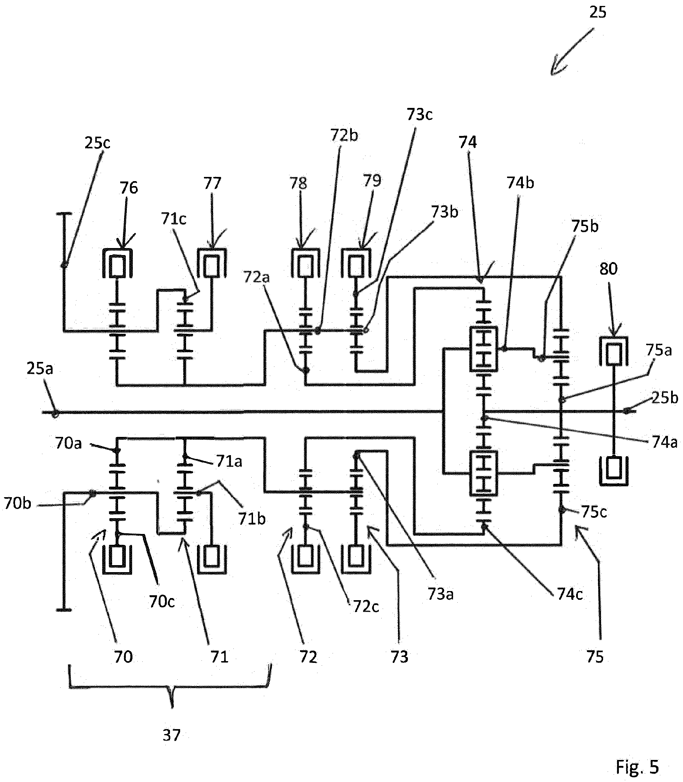

- Fig. 5: eine weitere alternative Ausführung der Leistungssummations- und/oder Leistungsverzweigungseinheit des Lenkantriebssystems der Fig. 1 oder 7 bis 11,

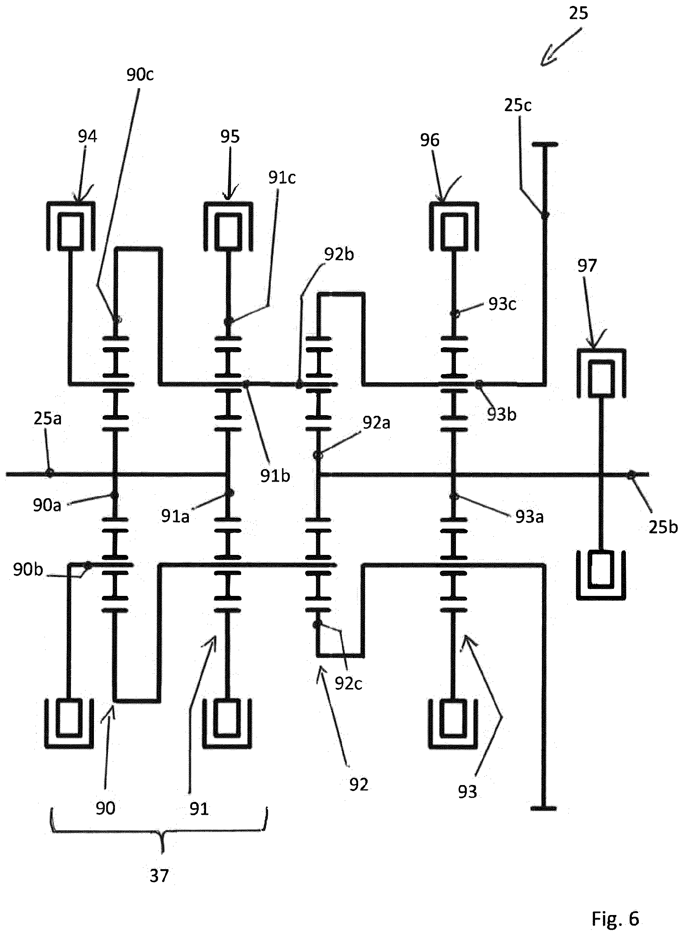

- Fig. 6: eine weitere alternative Ausführung der Leistungssummations- und/oder Leistungsverzweigungseinheit des Lenkantriebssystems der Fig. 1 oder 7 bis 11,

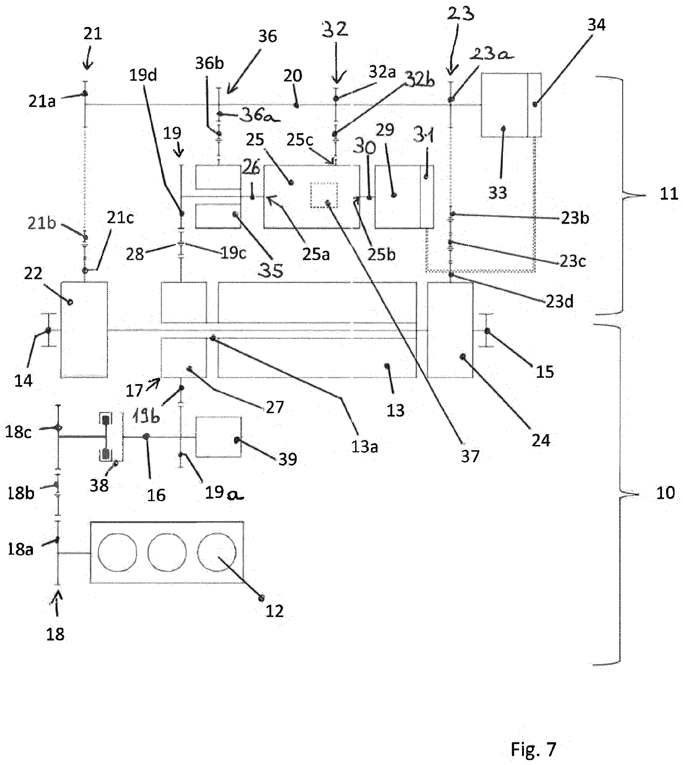

- Fig. 7: eine schematisierte Darstellung eines weiteren Lenkantriebssystems für ein bzw. eines radseitengelenkten Fahrzeugs zusammen mit einem Fahrantriebssystem des radseitengelenkten Fahrzeugs.

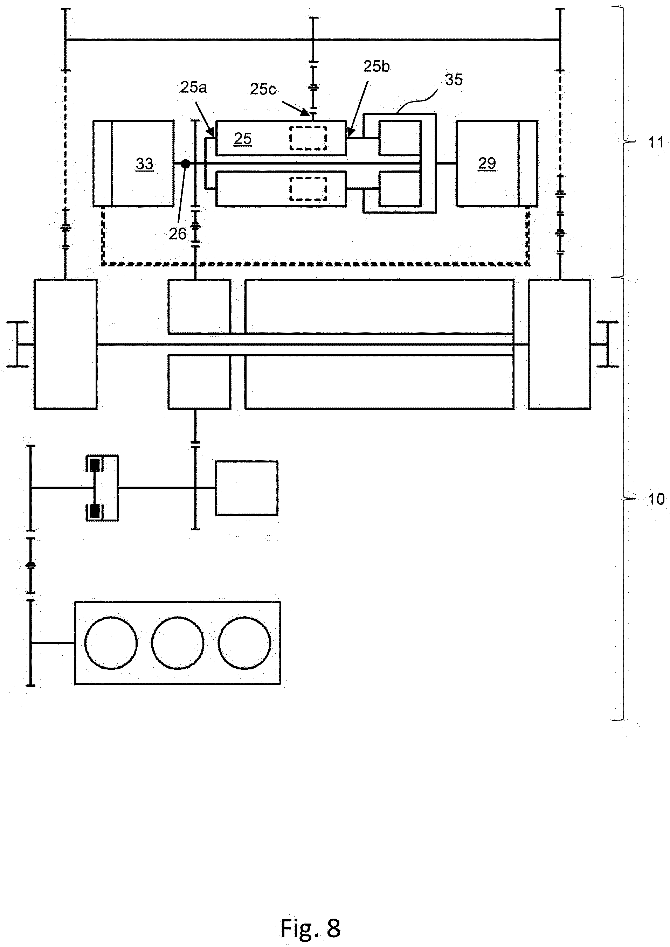

- Fig. 8: eine schematisierte Darstellung eines weiteren Lenkantriebssystems für ein bzw. eines radseitengelenkten Fahrzeugs zusammen mit einem Fahrantriebssystem des radseitengelenkten Fahrzeugs,

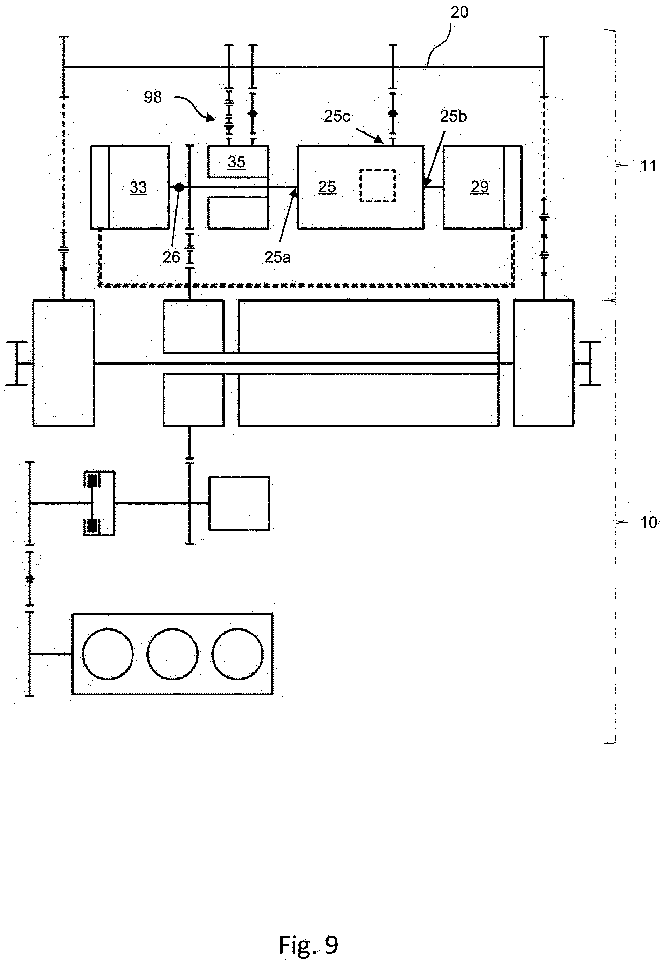

- Fig. 9: eine schematisierte Darstellung eines weiteren Lenkantriebssystems für ein bzw. eines radseitengelenkten Fahrzeugs zusammen mit einem Fahrantriebssystem des radseitengelenkten Fahrzeugs,

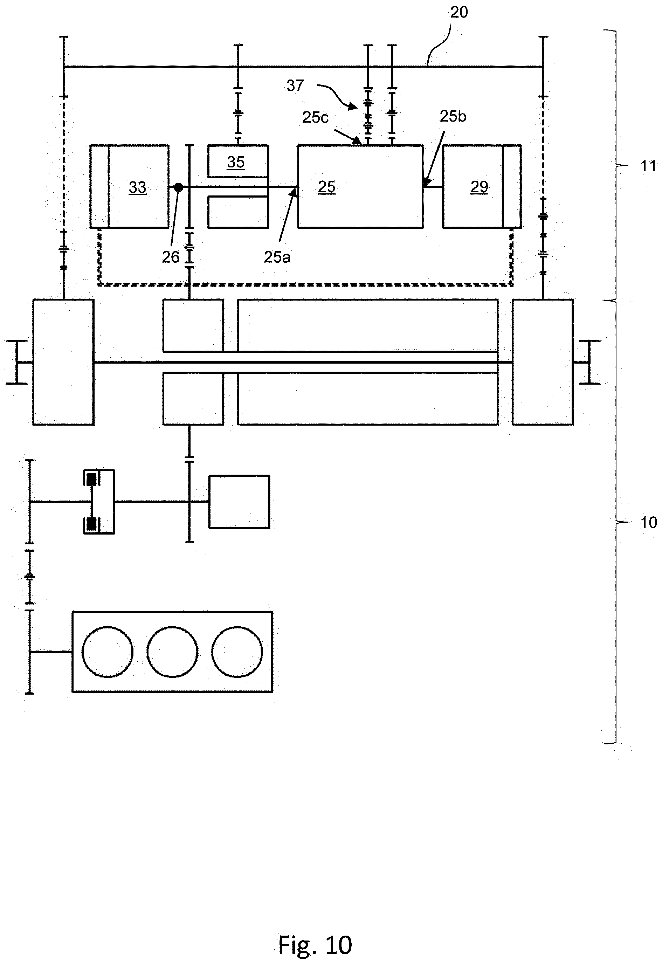

- Fig. 10: eine schematisierte Darstellung eines weiteren Lenkantriebssystems für ein bzw. eines radseitengelenkten Fahrzeugs zusammen mit einem Fahrantriebssystem des radseitengelenkten Fahrzeugs, und

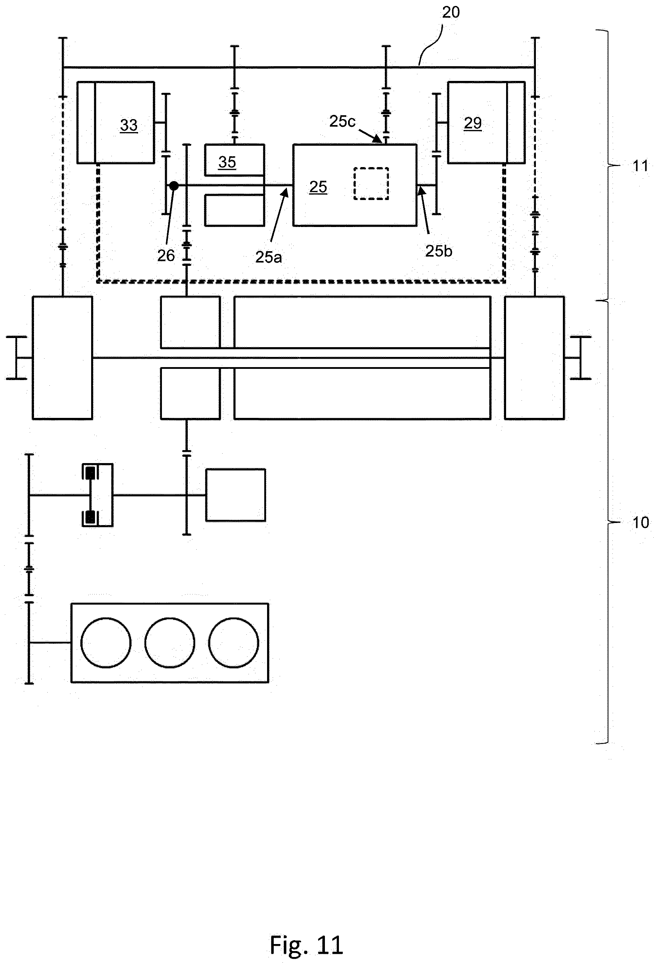

- Fig. 11: eine schematisierte Darstellung eines weiteren Lenkantriebssystems für ein bzw. eines radseitengelenkten Fahrzeugs zusammen mit einem Fahrantriebssystem des radseitengelenkten Fahrzeugs.

Die Erfindung betrifft ein Lenkantriebssystem für ein radseitengelenktes Fahrzeug bzw. eines radseitengelenkten Fahrzeugs, ein radseitengelenktes Fahrzeug mit einem solchen Lenkantriebssystem und einem Fahrantriebssystem sowie ein Verfahren zum Betreiben eines radseitengelenkten Fahrzeugs mit einem solchen Lenkantriebssystem.

Fig. 1 zeigt ein schematisiertes Antriebsstrangschema eines radseitengelenkten Fahrzeugs, nämlich Baugruppen eines Fahrantriebssystems 10 und eines Lenkantriebssystems 11 des radseitengelenkten Fahrzeugs.

Das Fahrantriebssystem 10 verfügt über mindestens ein Antriebsaggregat 12, welches als Brennkraftmaschine ausgeführt sein kann. Das mindestens ein Antriebsaggregat 12 wird auch als Primärantrieb bezeichnet.

Das Fahrantriebssystem 10 verfügt weiterhin über ein Fahrgetriebe 13, um Antriebsleistung für eine Fahrt des radseitengelenkten Fahrzeugs, welche das mindestens eine Antriebsaggregat 12 bereitstellt, an Abtrieben 14, 15 des radseitengelenkten Fahrzeugs bereitzustellen. Bei dem Abtrieb 14 handelt es sich um einen ersten oder linken Abtrieb und bei dem Abtrieb 15 um einen zweiten oder rechten Abtrieb des radseitengelenkten Fahrzeugs, insbesondere um Kettenabtriebe.

Gemäß Fig. 1 ist die von dem mindestens einen Antriebsaggregat 12 des Fahrantriebssystems 10 bereitgestellte Antriebsleistung über eine Welle 16 und eine Hauptleistungsverzweigungseinheit 17 des Fahrantriebssystems 10 einerseits an das Fahrgetriebe 13 des Fahrantriebssystems 10 und andererseits an das Lenkantriebssystem 11 übertragbar. Diese Welle 16 steht einerseits über eine Stirnradstufe 18, welche die Zahnräder 18a, 18b, 18c aufweist, mit dem Antriebsaggregat 12 und andererseits über eine weitere Stirnradstufe 19, welche die Zahnräder 19a, 19b, 19c, 19d aufweist, mit der Hauptleistungsverzweigungseinheit 17 in Wirkverbindung. Die Anzahl der jeweils gezeigten Zahnräder 18a bis 18c und 19a bis 19d ist rein exemplarisch.

Antriebsleistung, welche das mindestens eine Antriebsaggregat 12 bereitstellt und über die Welle 16 und die beiden Stirnradstufen 18, 19 an die Hauptleistungsverzweigungseinheit 17 übertragen wird, wird von der Hauptleistungsverzweigungseinheit 17 teilweise in das Fahrgetriebe 13 des Fahrantriebssystems 10 und teilweise in das Lenkantriebssystem 11 geleitet.

Über den Leistungspfad des Fahrantriebssystems 10, also über das Fahrgetriebe 13, kann an den Abtrieben 14, 15 eine Grunddrehzahl bereitgestellt werden, die der Fortbewegung des radseitengelenkten Fahrzeugs insbesondere bei Geradeausfahrt dient.

Das Lenkantriebssystem 11 des radseitengelenkten Fahrzeugs verfügt über ein Koppelelement 20, welches im gezeigten Ausführungsbeispiel als Nullwelle 20 ausgeführt ist. Obwohl die Ausführung des Koppelelements 20 als Nullwelle 20 bevorzugt ist, sind auch andere Bauformen von Koppelelementen möglich. Nachfolgend wird die Erfindung unter Bezugnahme auf eine Nullwelle 20 beschrieben.

Die Nullwelle 20 des Lenkantriebssystems 11 ist mit den radseitigen Abtrieben 14, 15 gekoppelt, nämlich mit dem linken Abtrieb 14 über eine Stirnradstufe 21, welche die Zahnräder 21a, 21b, 21c aufweist, und über ein Überlagerungsgetriebe 22, sowie mit dem rechten Abtrieb 15 über eine Stirnradstufe 23, welche die Zahnräder 23a, 23b, 23c, 23d aufweist, und über ein Überlagerungsgetriebe 24. Die Anzahl der jeweils gezeigten Zahnräder 21a bis 21 c und 23a bis 23d ist rein exemplarisch.

Dann, wenn die Nullwelle 20 stillsteht, fährt das radseitengelenkte Fahrzeug geradeaus.

Zur Lenkung muss die Nullwelle 20 rotieren, um dann über die Stirnradstufen 21 und 23 sowie die Überlagerungsgetriebe 22, 24 der Grunddrehzahl am jeweiligen Abtrieb 14, 15 eine Überlagerungsdrehzahl zu überlagern und so die Lenkung des radseitengelenkten Fahrzeugs zu bewirken.

Das Lenkantriebssystem 11 verfügt über eine Leistungssummations- und/oder Leistungsverzweigungseinheit 25. Ein erster Anschluss 25a dieser Leistungssummations- und/oder Leistungsverzweigungseinheit 25 ist an eine Welle 26 gekoppelt, die über das Übersetzungsverhältnis der Stirnradstufe 19 mit der Welle 16 des Fahrantriebssystems 10 gekoppelt ist.

Das Zahnrad 19b dieser Stirnradstufe 19 ist drehfest an ein antriebseitiges oder primärseitiges Teil eines Anfahrelements 27 der Hauptleistungsverzweigungseinheit 17 gekoppelt. Ein abtriebseitiges oder sekundärseitiges Teil des Anfahrelements 27 der Hauptleistungsverzweigungseinheit 17 ist an einen Getriebeeingang 13a des Fahrgetriebes 13 gekoppelt. Bei dem Anfahrelement 27 kann es sich um eine Reibkupplung oder um ein hydrodynamisches Anfahrelement handeln. Der Zustand des Anfahrelements 27 bestimmt die Leistungsverzweigung der Hauptleistungsverzweigungseinheit 17.

Das Anfahrelement 27 und das Zahnrad 19b der Stirnradstufe 19 bilden zusammen die Hauptleistungsverzweigungseinheit 17.

Das mit dem Zahnrad 19b der Hauptleistungsverzweigungseinheit 17 in Eingriff stehende Zahnrad 19c der Stirnradstufe 19 bildet einen sogenannten primären Leistungseintrieb 28 des Lenkantriebssystems 11, wobei eine drehzahlfeste Wirkverbindung zwischen dem primären Leistungseintrieb 28 des Lenkantriebssystems 11 und dem ersten Anschluss 25a der Leistungssummations- und/oder Leistungsverzweigungseinheit 25 besteht.

Die Leistungssummations- und/oder Leistungsverzweigungseinheit 25 des Lenkantriebssystems 11 verfügt über einen zweiten Anschluss 25b, an den mindestens eine erste elektrische Maschine 29 des Lenkantriebssystems 11 gekoppelt ist. Eine Antriebswelle 30 der mindestens einen ersten elektrischen Maschine 29 ist an den zweiten Anschluss 25b der Leistungssummations- und/oder Leistungsverzweigungseinheit 25 gekoppelt.

Die Drehzahl der mindestens einen ersten elektrischen Maschine 29 kann über eine jeweilige erste Leistungselektronik 31 variabel eingestellt bzw. geregelt werden, sodass demnach an dem zweiten Anschluss 25b der Leistungssummations- und/oder Leistungsverzweigungseinheit 25 eine variable Drehzahl über die jeweilige erste elektrische Maschine 29 bereitgestellt werden kann.

Ferner zeigt Fig. 1 einen dritten Anschluss 25c der Leistungssummations- und/oder Leistungsverzweigungseinheit 25, die an die Nullwelle 20 gekoppelt ist, und zwar im gezeigten Ausführungsbeispiel über eine Stirnradstufe 32 mit den Zahnrädern 32a, 32b. Die Anzahl der jeweils gezeigten Zahnräder 32a bis 32b ist rein exemplarisch.

Abhängig vom Übersetzungsverhältnis der Stirnradstufe 32 besteht eine drehzahlfeste Kopplung des dritten Anschlusses 25c der Leistungssummations- und/oder Leistungsverzweigungseinheit 25 an die Nullwelle 20.

Das Lenkantriebssystem 11, welches zumindest die Nullwelle 20 und die auf die obige Art und Weise in das Lenkantriebssystem 11 eingebundene Leistungssummations- und/oder Leistungsverzweigungseinheit 25 aufweist, erlaubt eine verlustarme, stufenlose Lenkung über den gesamten Lenk- und Fahrbereich des radseitengelenkten Fahrzeugs. Die Drehzahl der mindestens einen ersten elektrischen Maschine 29 kann präzise geregelt werden und so die Überlagerungsdrehzahl an der Nullwelle 20 präzise eingestellt werden.

Durch die elektrische Regelung der Drehzahl der mindestens einen ersten elektrischen Maschine 29 ist die Übertragungsfähigkeit der Lenkung zu den Abtrieben 14, 15 hin frei wählbar. Zur Steuerung bzw. Regelung der Überlagerungsdrehzahl werden keine mechanischen Kräfte benötigt, sodass das Lenkantriebssystem 11 ein Steer-By-Wire-Konzept bereitstellt.

In der in Fig. 1 gezeigten, besonders bevorzugten Ausprägung des Lenkantriebssystems 11 verfügt dasselbe zusätzlich zu der mindestens einen ersten elektrischen Maschine 29 über mindestens eine zweite elektrische Maschine 33, die an diejenige Welle 26 gekoppelt ist, an welche auch der erste Anschluss 25a der Leistungssummations- und/oder Leistungsverzweigungseinheit 25 und der primäre Leistungseintrieb 28 gekoppelt sind. Der Betrieb der mindestens einen zweiten elektrischen Maschine 33 kann über eine jeweilige zweite Leistungselektronik 34 geregelt werden.

Die elektrischen Maschinen 29, 33 können abhängig von der Betriebsbedingung bzw. Betriebssituation sowohl generatorisch als auch motorisch betrieben werden.

So kann die mindestens eine zweite elektrische Maschine 33 im Fahrbetrieb generatorisch betrieben werden, um so einen ersten Teil der ausgehend von der Hauptleistungsverzweigungseinheit 17 am primären Leistungseintrieb 28 des Lenkantriebssystems 11 bereitgestellten Antriebsleistung in elektrische Energie zu wandeln, die dann für den motorischen Betrieb der mindestens einen ersten elektrischen Maschine 29 genutzt werden kann. In diesem Fall wird die Leistungssummations- und/oder Leistungsverzweigungseinheit 25 in einem Leistungssummationsbetrieb genutzt, um die von der mindestens einen ersten elektrischen Maschine 29 am zweiten Anschluss 25b der Leistungssummations- und/oder Leistungsverzweigungseinheit 25 bereitgestellte Leistung und einen zweiten Teil der Antriebsleistung des Fahrantriebssystems 10, welche die Hauptleistungsverzweigungseinheit 17 an dem primären Leistungseintrieb 28 des Lenkantriebssystems 11 bereitstellt und welcher am ersten Anschluss 25a der Leistungssummations- und/oder Leistungsverzweigungseinheit 25 anliegt, an dem dritten Anschluss 25c der Leistungssummations- und/oder Leistungsverzweigungseinheit 25 überlagert bereitzustellen.

Umgekehrt kann auch die mindestens eine erste elektrische Maschine 29 generatorisch arbeiten und elektrische Leistung erzeugen, die dann der mindestens einen zweiten elektrischen Maschine 33 zur Verfügung gestellt werden kann, um dieselbe dann motorisch zu betreiben. In diesem Fall wird die Leistungssummations- und/oder Leistungsverzweigungseinheit 25 in einem Leistungsverzweigungsbetrieb genutzt, wobei dann die Leistungssummations- und/oder Leistungsverzweigungseinheit 25 Antriebsleistung des Fahrantriebssystems 10, welche die Hauptleistungsverzweigungseinheit 17 an dem primären Leistungseintrieb 28 des Lenkantriebssystems 11 bereitstellt und welche am ersten Anschluss 25a der Leistungssummations- und/oder Leistungsverzweigungseinheit 25 anliegt, teilweise am zweiten Anschluss 25b und teilweise am dritten Anschluss 25c der Leistungssummations- und/oder Leistungsverzweigungseinheit 25 bereitzustellen.

Dann, wenn das Lenkantriebssystem 11 die mindestens eine erste elektrische Maschine 29 und die mindestens eine zweite elektrische Maschine 33 aufweist, kann sich dasselbe autark mit Leistung versorgen und ist unabhängig von externer Energie, sodass vom Grundsatz her kein Batteriesystem benötigt wird. Es kann auf Leistungsvernichter, wie z. B. Bremswiderstände, und/oder elektrische Energiespeicher zur Abführung überschüssiger Leistung verzichtet werden.

Sowohl die mindestens eine erste elektrische Maschine 29 als auch die mindestens eine zweite elektrische Maschine 33 des Lenkantriebssystems 11 kann fehlertolerant ausgeführt sein. Dies kann zum Beispiel dadurch gewährleistet werden, dass mehrere vollwertige erste elektrische Maschinen 29 und/oder mehrere vollwertige zweite elektrische Maschinen 33, welche elektrisch getrennt von zwei Leistungselektroniken 31 bzw. 34 angesteuert werden, bereitgehalten werden.

Alternativ ist es auch möglich, zur fehlertoleranten Ausführung die jeweilige elektrische Maschine 29, 33 mit elektrisch getrennten Phasen auszuführen, wobei dann jeder Wicklungsstrang von einer elektrisch getrennten Leistungselektronik angesteuert wird. In jedem Fall kann bei fehlertoleranter Ausführung der jeweiligen elektrischen Maschine die Lenkung gegen Ausfall abgesichert werden.

Im gezeigten, bevorzugten Ausführungsbeispiel des Lenkantriebssystems 11 ist parallel zur Leistungssummations- und/oder Leistungsverzweigungseinheit 25 eine Leistungseinheit 35 geschaltet, die ausgebildet ist, die Welle 26, an welche der erste Anschluss 25a der Leistungssummations- und/oder Leistungsverzweigungseinheit 25 gekoppelt ist, parallel zur Leistungssummations- und/oder Leistungsverzweigungseinheit 25 an die Nullwelle 20 zu koppeln. Bei dieser Leistungseinheit 35 handelt es sich insbesondere um schaltbare Reibkupplung oder um eine hydrodynamische Kupplung, die in geschlossenem Zustand im Schlupf betrieben wird. Gemäß Fig. 1 steht dabei diese Leistungseinheit 35 über eine Stirnradstufe 36 mit den Zahnrädern 36a, 36b mit der Nullwelle 20 in Wirkverbindung. Durch die Drehmomentunterstützung der Leistungseinheit bzw. des Leistungselements 35 bei im Schlupf betriebener/m Leistungseinheit bzw. -element 35 kann die Leistungsdichte erhöht und eine Baugröße der jeweiligen elektrischen Maschine 29, 33 reduziert werden.

Im gezeigten Ausführungsbeispiel ist in die Leistungssummations- und/oder Leistungsverzweigungseinheit 25, die insbesondere von mindestens einer Planetenradstufe bereitgestellt wird, ein Wendegetriebe 37 integriert. Über ein solches Wendegetriebe 37 kann eine Drehrichtung an der Nullwelle 20 umgekehrt werden, um die Lenkrichtung zu beeinflussen. Das Wendegetriebe 37 kann dabei an beliebiger Stelle in die Leistungssummations- und/oder Leistungsverzweigungseinheit 25 integriert sein, zum Beispiel direkt nach dem ersten Anschluss 25a vor einer Überlagerung mit der von der mindestens einen ersten elektrischen Maschine 29 bereitgestellten Leistung oder auch nach dieser Überlagerung unmittelbar vor dem dritten Anschluss 25c.

Die Leistungssummations- und/oder Leistungsverzweigungseinheit 25 des Lenkantriebssystems 11 kann in unterschiedlichen Betriebszuständen betrieben werden. So ist die Leistungssummations- und/oder Leistungsverzweigungseinheit 25 ausgebildet, um in einem ersten Betriebszustand derselben den ersten Anschluss 25a und den zweiten Anschluss 25b in einem Überlagerungsbetrieb an den dritten Anschluss 25c zu koppeln. Ferner ist die Leistungssummations- und/oder Leistungsverzweigungseinheit 25 ausgebildet, um in einem zweiten Betriebszustand derselben den ersten Anschluss 25a und den zweiten Anschluss 25b in einem Festübersetzungsbetrieb beide in einem festen Übersetzungsverhältnis an den dritten Anschluss 25c zu koppeln, wobei der zweite Anschluss 25b dann insbesondere lastfrei betrieben werden kann.

Ferner ist die Leistungssummations- und/oder Leistungsverzweigungseinheit 25 vorzugsweise ausgebildet, um in einem dritten Betriebszustand einen Mischbetrieb zwischen dem ersten und dem zweiten Betriebszustand bereitzustellen.

Bevorzugte Ausführungsformen der Leistungssummations- und/oder Leistungsverzweigungseinheit 25 werden nachfolgend unter Bezugnahme auf Fig. 2 bis 6 beschrieben.

Fig. 2 zeigt eine Ausführungsform einer Leistungssummations- und/oder Leistungsverzweigungseinheit 25 mit fünf Planetenstufen 40, 41, 42, 43 und 44 sowie vier Schaltelementen 45, 46, 47 und 48, die allesamt als Bremsen ausgeführt sind. Die beiden Planetenstufen 41 und 42 bilden zusammen mit den beiden Schaltelementen 46 und 47 das Wendegetriebe 37. Abhängig von der Schaltstellung der Schaltelemente 46 und 47 kann die Drehrichtung der Nullwelle 20 beeinflusst werden. Das Wendegetriebe 37 kann alternativ auch über Kegelradstufen mit Kupplungen bereitgestellt werden.

Der erste Anschluss 25a der Leistungssummations- und/oder Leistungsverzweigungseinheit 25 der Fig. 2 ist drehfest an ein Sonnenrad 40a der Planetenstufe 40 und an ein Sonnenrad 43a der Planetenstufe 43 gekoppelt. Der zweite Anschluss 25b der Leistungssummations- und/oder Leistungsverzweigungseinheit 25 der Fig. 2 ist drehfest an ein Sonnenrad 44a der Planetenstufe 44 gekoppelt. Der dritte Anschluss 25c der Leistungssummations- und/oder Leistungsverzweigungseinheit 25 ist drehfest an einen Steg 41b der Planetenstufe 41 des Wendegetriebes 37 gekoppelt. Ein Steg 40b der Planetenstufe 40 ist abhängig von der Schaltstellung des Schaltelements 45 entweder gehäusefest angebunden oder frei drehbar. Ein Hohlrad 40c der Planetenstufe 40 ist drehfest an Sonnenräder 41a, 42a der beiden Planetenstufen 41, 42 des Wendegetriebes 37 gekoppelt, ebenso an ein Hohlrad 43c der Planetenstufe 43. Der an den dritten Anschluss 25c gekoppelte Steg 41b der Planetenstufe 41 ist ferner an ein Hohlrad 42c der weiteren Planetenstufe 42 des Wendegetriebes 37 drehfest gekoppelt. Bei der Planetenstufe 41 des Wendegetriebes 37 ist ein Hohlrad 41c derselben, abhängig von der Schaltstellung des Schaltelements 46 entweder gehäusefest angebunden oder frei drehbar. Bei der Planetenstufe 42 des Wendegetriebes 37 ist ein Steg 42b abhängig von der Schaltstellung des Schaltelements 47 entweder frei drehbar oder gehäusefest angebunden. Ein Steg 44b der Planetenstufe 44, deren Sonnenrad 44a an den zweiten Eingang 25b gekoppelt ist, ist ebenfalls an den Steg 43b der Planetenstufe 43 drehfest gekoppelt, wobei beide Stege 43b, 44b dieser beiden Planetenstufen 43, 44 abhängig von der Schaltstellung des Schaltelements 48 entweder gehäusefest angebunden sind oder frei drehen können. Das Hohlrad 44c derjenigen Planetenstufe 44, deren Sonnenrad 44a an den zweiten Anschluss 25b der Leistungssummations- und/oder Leistungsverzweigungseinheit 25 gekoppelt ist, ist in Fig. 2 gehäusefest angebunden.

Dann, wenn bei der Leistungssummations- und/oder Leistungsverzweigungseinheit 25 der Fig. 2 ausschließlich das Schaltelement 46 geschlossen ist und die Schaltelemente 45, 47 und 48 allesamt geöffnet sind, kann die Leistungssummations- und/oder Leistungsverzweigungseinheit 25 im Überlagerungsbetrieb genutzt werden, und zwar in einer ersten Drehrichtung der Nullwelle 20. Ist hingegen ausschließlich das Schaltelement 47 geschlossen und sind die Schaltelemente 45, 46 und 48 allesamt geöffnet, so wird ein Überlagerungsbetrieb in einer zweiten entgegengesetzten Richtung der Nullwelle 20 bereitgestellt.

Dann, wenn die Schaltelemente 46 und 48 jeweils geschlossen und die Schaltelemente 45 und 47 jeweils geöffnet sind, ist der Anschlüsse 25a in einem ersten Festübersetzungsbetriebsmodus über eine feste Übersetzung an den Anschluss 25c gekoppelt, wobei hierbei der zweite Anschluss 25b festgesetzt ist und insbesondere lastlos betrieben werden kann. Auch dann, wenn die Schaltelemente 45 und 46 beide geschlossen und die Schaltelemente 47 und 48 beide geöffnet sind, sind die beiden Anschlüsse 25a und 25b in einem zweiten Festübersetzungsbetriebsmodus über eine feste Übersetzung an den Anschluss 25c gekoppelt, wobei dann der Anschluss 25b wiederum insbesondere lastfrei betrieben werden kann. Werden die Schaltelemente 48 und 45 nicht vollständig geschlossen, sondern lediglich schlupfend, so kann ein Mischbetrieb zwischen den oben beschriebenen Betriebsmodi, nämlich dem Überlagerungsbetrieb und dem Festübersetzungsbetrieb, gewährleistet werden. Analog zum Überlagerungsbetrieb können durch Schließen des Schaltelements 47 anstatt des Schaltelements 46 alle Festübersetzungsbetriebsmodi auch in einer zweiten entgegengesetzten Drehrichtung der Nullwelle 20 betrieben werden.

Eine weitere mögliche Ausführungsform der Leistungssummations- und/oder Leistungsverzweigungseinheit 25 zeigt Fig. 3.

Die Leistungssummations- und/oder Leistungsverzweigungseinheit 25 der Fig. 3 verfügt über vier Planetenstufen 50, 51, 52 und 53 sowie über drei Schaltelemente 54, 55 und 56, die wiederum allesamt als Bremsen ausgebildet sind. Die Planetenstufen 50 und 51 sowie die Schaltelemente 54 und 55 bilden in Fig. 3 das Wendegetriebe 37.

In Fig. 3 ist der erste Anschluss 25a der Leistungssummations- und/oder Leistungsverzweigungseinheit 25 an das Sonnenrad 52a der Planetenstufe 52 drehfest gekoppelt. Der zweite Anschluss 25b der Leistungssummations- und/oder Leistungsverzweigungseinheit 25 ist drehfest an das Sonnenrad 53a der Planetenstufe 53 gekoppelt. Der dritte Anschluss 25c ist an den Steg 50b der Planetenstufe 50 des Wendegetriebes 37 drehfest gekoppelt. In Fig. 3 sind die Hohlräder 52c und 53c der beiden Planetenstufen 52 und 53, an deren Sonnenräder 52a, 53a die Anschlüsse 25a, 25b gekoppelt sind, untereinander drehfest gekoppelt und stehen mit dem Schaltelement 56 derart in Wirkverbindung, dass dann, wenn das Schaltelement 56 geschlossen ist, die beiden Hohlräder 52c, 53c gehäusefest angebunden sind, hingegen im geöffneten Zustand des Schaltelements 56 frei drehen können. Der Steg 53b der Planetenstufe 53, an dessen Sonnenrad 53a der zweite Anschluss 25b drehfest gekoppelt ist, ist gehäusefest angebunden. Der Steg 52b der Planetenstufe 52, an deren Sonnenrad 52a der erste Anschluss 25a drehfest gekoppelt ist, ist mit den beiden Sonnenrädern 50a, 51a der beiden Planetenstufen 50, 51 des Wendegetriebes 37 drehfest gekoppelt. Der Steg 50b der Planetenstufe 50 des Wendegetriebes 37, an welchen der dritte Anschluss 25c gekoppelt ist, ist ferner an das Hohlrad 51c der anderen Planetenstufe 51 des Wendegetriebes 37 drehfest gekoppelt. Der Steg 51b dieser Planetenstufe 51 ist bei geschlossenem Schaltelement 55 gehäusefest angebunden und kann bei geöffnetem Schaltelement 55 frei drehen.

Dann, wenn bei der Leistungssummations- und/oder Leistungsverzweigungseinheit 25 der Fig. 3 das Schaltelement 54 geschlossen und die beiden Schaltelemente 55 und 56 beide geöffnet sind, wird ein Überlagerungsbetriebsmodus in einer ersten Drehrichtung der Nullwelle bereitgestellt.

Ist hingegen das Schaltelement 55 geschlossen und sind die beiden Schaltelemente 54 und 56 geöffnet, so wird ein Überlagerungsbetriebsmodus in einer entgegengesetzten zweiten Drehrichtung der Nullwelle 20 bereitgestellt.

Sind die beiden Schaltelemente 54 und 56 geschlossen und ist das Schaltelement 55 geöffnet, so wird ein Festübersetzungsbetriebsmodus bereitgestellt. Durch schlupfenden Betrieb des Schaltelements 56 kann bei voll geschlossenem Schaltelement 54 und geöffnetem Schaltelement 55 ein Mischbetrieb zwischen Überlagerungsbetrieb und Festübersetzungsbetrieb gewährleistet werden. Analog zum Überlagerungsbetrieb, können durch Schließen des Schaltelements 55 anstatt des Schaltelements 54, alle Festübersetzungsbetriebsmodi auch in einer zweiten entgegengesetzten Drehrichtung der Nullwelle 20 betrieben werden.

Eine weitere bevorzugte Ausführungsform einer Leistungssummations- und/oder Leistungsverzweigungseinheit 25 zeigt Fig. 4.

Die in Fig. 4 gezeigte Leistungssummations- und/oder Leistungsverzweigungseinheit 25 weist vier Planetenstufen 60, 61, 62 und 63 und fünf Schaltelemente 64, 65, 66, 67, 68 auf. Bei den Schaltelementen 64, 65, 67, 68 handelt es sich um Bremsen, beim Schaltelement 66 handelt es sich um eine Kupplung. Die beiden Planetenstufen 60 und 61 sowie die beiden Schaltelemente 64 und 65 stellen das Wendegetriebe 37 bereit.

Der erste Anschluss 25a der Leistungssummations- und/oder Leistungsverzweigungseinheit 25 ist an ein Sonnenrad 62a der Planetenstufe 62 drehfest gekoppelt, wobei dieses Sonnenrad 62a abhängig von der Schaltstellung der Kupplung 66 an den Steg 62b der Planetenstufe 62 gekoppelt werden kann. Das Hohlrad 62c dieser Planetenstufe 62 ist abhängig von der Schaltstellung der Bremse 67 entweder gehäusefest angebunden oder frei drehbar.

Der zweite Anschluss 25b der Leistungssummations- und/oder Leistungsverzweigungseinheit 25 der Fig. 4 ist an das Sonnenrad 63a der Planetenstufe 63 gekoppelt, deren Steg 63b an das Hohlrad 62c der Planetenstufe 62 gekoppelt ist, und deren Hohlrad 63c an den Steg 62b der Planetenstufe 62 gekoppelt ist. Über ein Schaltelement 68 kann der zweite Anschluss 25b festgesetzt werden.

Die Sonnenräder 60a, 61a der beiden Planetenstufen 60, 61 des Wendegetriebes 37 sind beide miteinander drehfest gekoppelt und an den Steg 62b der Planetenstufe 62 und bei geschlossener Kupplung 66 auch an das Sonnenrad 62a der Planetenstufe 62 angebunden.

Der dritte Anschluss 25c der Leistungssummations- und/oder Leistungsverzweigungseinheit 25 der Fig. 4 ist an den Steg 60b der Planetenstufe 60 des Wendegetriebes 37 drehfest angebunden, der ferner an das Hohlrad 61c der anderen Planetenstufe 61 des Wendegetriebes 37 drehfest angebunden ist. Das Hohlrad 60c der Planetenstufe 60 ist abhängig von der Schaltstellung der Bremse 64 entweder gehäusefest angebunden oder kann frei drehen. Ferner ist der Steg 61b der anderen Planetenstufe 61 des Wendegetriebes 37 abhängig von der Schaltstellung des Bremse 65 entweder gehäusefest angebunden oder kann frei drehen.

Dann, wenn das Schaltelement 64 geschlossen ist und alle anderen Schaltelemente 65, 66, 67 und 68 jeweils geöffnet sind, kann ein Überlagerungsbetriebsmodus in einer ersten Drehrichtung der Nullwelle 20 bereitgestellt werden. Ist hingegen ausschließlich das Schaltelement 65 geschlossen und sind die Schaltelemente 64, 66, 67 und 68 allesamt geöffnet, so wird ein Überlagerungsbetriebsmodus in einer zweiten entgegengesetzten Drehrichtung bereitgestellt. Dann, wenn die Schaltelemente 64 und 67 beide geschlossen und die anderen Schaltelemente 65, 66 und 68 alle geöffnet sind, kann ein erster Festübersetzungsbetriebsmodus bereitgestellt werden. Ein zweiter Festübersetzungsbetriebsmodus wird dann bereitgestellt, wenn das Schaltelement 64 und das Schaltelement 68 geschlossen sind, hingegen die Schaltelemente 65, 66 und 67 allesamt geöffnet sind. Ein dritter Festübersetzungsbetriebsmodus wird dann bereitgestellt, wenn die Schaltelemente 64 und 66 beide geschlossen sind und die Schaltelemente 65, 67 und 68 allesamt geöffnet sind.

Werden die Schaltelemente 66, 67 und 68 nicht fest geschlossen, sondern schlupfend betrieben, so kann ein Mischbetrieb zwischen dem Überlagerungsbetrieb und dem Festübersetzungsbetrieb gewährleistet werden. Analog zum Überlagerungsbetrieb, können durch Schließen des Schaltelements 65 anstatt des Schaltelements 64, alle Festübersetzungsbetriebsmodi auch in einer zweiten entgegengesetzten Drehrichtung der Nullwelle 20 betrieben werden.

Eine weitere Leistungssummations- und/oder Leistungsverzweigungseinheit 25 zeigt Fig. 5. Die Leistungssummations- und/oder Leistungsverzweigungseinheit 25 der Fig. 5 weist insgesamt sechs Planetenstufen 70, 71, 72, 73, 74 und 75 sowie insgesamt fünf Schaltelemente 76, 77, 78, 79 und 80 aus. Die beiden Planetenstufen 70 und 71 stellen zusammen mit den Schaltelementen 76 und 77 das Wendegetriebe 37 bereit.

Der erste Anschluss 25a der Leistungssummations- und/oder Leistungsverzweigungseinheit 25 ist an den Steg 74b der Planetenstufe 74 drehfest gekoppelt, der einen Planetenträger 74b trägt, der zwei Planetenräder aufnimmt. Bei der Planetenstufe 74 handelt es sich demnach um einen Doppelplanetensatz. Der Steg 74b dieser Planetenstufe 74 ist an den Steg 75b der Planetenstufe 75 drehfest gekoppelt, an deren Sonnenrad 75a der zweite Anschluss 25b der Leistungssummations- und/oder Leistungsverzweigungseinheit 25 drehfest gekoppelt ist. Über das als Bremse ausgebildete Schaltelement 80 kann das Sonnenrad 75a der Planetenstufe 75 gehäusefest angebunden werden. Dabei ist das Sonnenrad 75a drehfest an das Sonnenrad 74a der als Doppelplanetenstufe ausgebildeten Planetenstufe 74 gekoppelt. Das Hohlrad 74c der Planetenstufe 74 ist an das Sonnenrad 72a der Planetenstufe 72 drehfest gekoppelt, das Hohlrad 75c der Planetenstufe 75 ist an das Sonnenrad 73a der Planetenstufe 73 drehfest gekoppelt. Die Stege 72b und 73b dieser beiden Planetenstufen 72 und 73 sind untereinander drehfest gekoppelt, ebenso wie an die Sonnenräder 70a und 71a der beiden Planetenstufen 70, 71 des Wendegetriebes 37.

Die Hohlräder 72c und 73c der Planetenstufen 72 und 73 können abhängig von der Schaltstellung der Schaltelemente 78 und 79 entweder frei drehen oder sind gehäusefest angebunden. Der Steg 70b der Planetenstufe 70 des Wendegetriebes 37 ist an das Hohlrad 71c der anderen Planetenstufe 71 des Wendegetriebes 37 drehfest gekoppelt. Das Schaltelement 76 wirkt mit dem Hohlrad 70c der Planetenstufe 70 und das Schaltelement 77 mit dem Steg 71b der Planetenstufe 71 zusammen.

Mit der Leistungssummations- und/oder Leistungsverzweigungseinheit 25 der Fig. 5 können Überlagerungsbetriebsmodi mit unterschiedlichen Geschwindigkeiten bereitgestellt werden. Dann, wenn die Schaltelemente 76 und 78 beide geschlossen sind, hingegen die anderen Schaltelemente allesamt geöffnet sind, wird ein erster Überlagerungsbetriebsmodus mit einer relativ langsamen Drehzahl der Nullwelle 20 in einer ersten Drehrichtung derselben bereitgestellt. Ist hingegen das Schaltelement 76 zusammen mit dem Schaltelement 79 geschlossen und sind die anderen Schaltelemente geöffnet, so wird in der ersten Drehrichtung der Nullwelle 20 ein relativ schnell drehender Überlagerungsbetriebsmodus gewährleistet. Sind die beiden Schaltelemente 77 und 78 beide geschlossen und die übrigen Schaltelemente geöffnet, so wird in einer entgegengesetzten zweiten Drehrichtung der Nullwelle der relativ langsame Überlagerungsbetriebsmodus bereitgestellt, sind hingegen die Schaltelemente 77 und 79 beide geschlossen und die übrigen Schaltelemente geöffnet, so wird in der entgegengesetzten zweiten Drehrichtung ein relativ schnell drehender Überlagerungsbetriebsmodus gewährleistet.

Durch Schließen des Schaltelements 80 können Festübersetzungsbetriebsmodus gewährleistet werden, nämlich dann, wenn die Schaltelemente 76, 78 und 80 geschlossen sind, ein erster Festübersetzungsbetriebsmodus und dann, wenn die Schaltelemente 76, 79 und 80 geschlossen sind, ein zweiter Festübersetzungsbetriebsmodus.

Wird das Schaltelement 80 nicht fest geschlossen, sondern schlupfend betrieben, so kann ein Mischbetrieb zwischen dem Überlagerungsbetrieb und dem Festübersetzungsbetrieb gewährleistet werden. Analog zum Überlagerungsbetrieb, können durch Schließen des Schaltelements 77 anstatt des Schaltelements 76, alle Festübersetzungsbetriebsmodi auch in einer zweiten entgegengesetzten Drehrichtung der Nullwelle 20 betrieben werden.

Auch Fig. 6 zeigt ein Ausführungsbeispiel einer Leistungssummations- und/oder Leistungsverzweigungseinheit 25.Die Leistungssummations- und/oder Leistungsverzweigungseinheit 25 der Fig. 6 weist vier Planetenstufen 90, 91, 92 und 93 sowie vier Schaltelemente 94, 95, 96 und 97 auf. Die beiden Planetenstufen 90 und 91 bilden zusammen mit den beiden Schaltelementen 94 und 95 das Wendegetriebe 37.

Der erste Anschluss 25a der Leistungssummations- und/oder Leistungsverzweigungseinheit 25 ist drehfest an die beiden Sonnenräder 90a, 91a der beiden Planetenstufen 90, 91 des Wendegetriebes 37 gekoppelt. Der Steg 90b der Planetenstufe 90 ist abhängig von der Schaltstellung des Schaltelements 94 gehäusefest angebunden oder frei drehbar. Das Hohlrad 90c der Planetenstufe 90 ist an den Steg 91b der Planetenstufe 91 des Wendegetriebes 37 drehfest angebunden, ferner an den Steg 92b der Planetenstufe 92. Das Hohlrad 91c der Planetenstufe 91 des Wendegetriebes 37 ist abhängig von der Schaltstellung des Schaltelements 95 entweder gehäusefest angebunden oder frei drehbar. Der zweite Anschluss 25b der Leistungssummations- und/oder Leistungsverzweigungseinheit 25 ist an die Sonnenräder 92a, 93a der beiden Planetenstufen 92 und 93 drehfest angebunden. Über das Schaltelement 97 können diese beiden Sonnenräder 92a, 93a gehäusefest angebunden werden. Das Hohlrad 92c der Planetenstufe 92 ist an den Steg 93b der Planetenstufe 93 drehfest angebunden, an welche auch der dritte Anschluss 25c der Leistungssummations- und/oder Leistungsverzweigungseinheit 25 angebunden ist. Das Hohlrad 93c der Planetenstufe 93 ist abhängig von der Schaltstellung des Schaltelements 96 gehäusefest angebunden oder frei drehbar.

Dann, wenn das Schaltelement 94 geschlossen ist und die Schaltelemente 95, 96 und 97 allesamt geöffnet sind, wird ein Überlagerungsbetriebsmodus in einer ersten Drehrichtung der Nullwelle 20 bereitgestellt. Ist hingegen das Schaltelement 95 geschlossen und sind die Schaltelemente 94, 96 und 97 allesamt geöffnet, so wird ein Überlagerungsbetriebsmodus in einer entgegengesetzten zweiten Drehrichtung gewährleistet. Ist lediglich das Schaltelement 96 geschlossen und sind die Schaltelemente 94, 95 und 97 allesamt geöffnet, so ist der erste Anschluss 25a abgekoppelt und es stellt ausschließlich die an den zweiten Anschluss 25b angeschlossene mindestens eine erste elektrische Maschine 29 Leistung an der Leistungssummations- und/oder Leistungsverzweigungseinheit 25 bereit. Sind die Schaltelemente 94 und 97 beide geschlossen und die Schaltelemente 95 und 96 beide geöffnet, so wird ein Festübersetzungsbetrieb bereitgestellt.

Wird das Schaltelement 97 nicht fest geschlossen, sondern schlupfend betrieben, so kann ein Mischbetrieb zwischen dem Überlagerungsbetrieb und dem Festübersetzungsbetrieb gewährleistet werden. Analog zum Überlagerungsbetrieb, kann durch Schließen des Schaltelements 95 anstatt des Schaltelements 94, der Festübersetzungsbetriebsmodus auch in einer zweiten entgegengesetzten Drehrichtung der Nullwelle 20 betrieben werden.

Durch die Wahl der Betriebszustände in der Leistungssummations- und/oder Leistungsverzweigungseinheit 25 kann in Kombination mit der Regelung der Drehzahl an der mindestens einen ersten elektrischen Maschine 29 die Drehzahl an der Nullwelle 20 besonders vorteilhaft stufenlos eingestellt werden. Hierdurch kann eine stufenlose Lenkung über den gesamten Lenkbereich gewährleistet werden. Die Übersetzungen der Planetenstufen sind dabei vorzugsweise so gewählt, dass beim Umschalten von einer Betriebsart zur anderen Betriebsart es zu keiner sprunghaften Drehzahlveränderung an der Nullwelle 20 kommt. Die mindestens eine erste elektrische Maschine 29 kann ihren Schlupf aktiv ausregeln.

Die Leistungssummations- und/oder Leistungsverzweigungseinheit 25 weist also mindestens vier Planetensätze und mindestens drei Schaltelemente auf, wobei mindestens zwei Planetensätze und mindestens zwei Schaltelemente das in die Leistungssummations- und/oder Leistungsverzweigungseinheit 25 integrierte Wendegetriebe 37 bilden, und wobei mindestens zwei weitere Planetensätze und mindestens ein weiteres Schaltelement abhängig von der Schaltstellung der Schaltelemente an der Bereitstellung der unterschiedlichen Betriebszustände der Leistungssummations- und/oder Leistungsverzweigungseinheit 25 beteiligt sind.

Der Überlagerungsbetrieb ist jeweils die Normalbetriebsart der Leistungssummations- und/oder Leistungsverzweigungseinheit 25. Mit dem Festübersetzungsbetrieb lassen sich verschiedene Funktionen abdecken: Erstens kann durch festes Schließen der Schaltelemente, die an der Bereitstellung der Festübersetzungen beteiligt sind, eine feste Übersetzung eingestellt werden, sodass Leistung rein über den ersten Anschluss 25a bereitgestellt wird und der zweite Anschluss 25b lastlos ist. In dem Fall findet keine Überlagerung mehr statt. Diese Betriebsart kann man z. B. als Notbetrieb nutzen, falls z. B. die mindestens eine erste elektrische Maschine 29 und/oder die mindestens eine zweite elektrische Maschine 33 ausfällt. Mit den Festübersetzungen könne feste Lenkradien eingestellt werden. Zweitens kann durch schlupfendes bzw. schleifendes Schließen der Schaltelemente, einen Teil der Leistung über die Überlagerung, bzw. an der Überlagerung vorbei zum Wendegang übertragen, um die mindestens eine erste elektrische Maschine 29 am zweiten Anschluss 25b zu entlasten. Damit lässt sich die Auslegungsgröße hinsichtlich Leistung und/oder Bauraum für die mindestens eine erste elektrische Maschine 29 reduzieren.

Fig. 1 zeigt weiterhin eine schaltbare Kupplung 38 des Fahrantriebssystems 10, über welche das mindestens eine Antriebsaggregat 12 abgekoppelt werden kann, nämlich von der Hauptleistungsverzweigungseinheit 17 und so vom Fahrgetriebe 13. Ferner zeigt Fig. 1 eine elektrische Maschine 39 des Fahrantriebssystems 10, die an die Welle 16 gekoppelt ist.

Über eine solche elektrische Maschine 39 des Fahrantriebssystems 10 kann die mindestens eine zweite elektrische Maschine 33 des Lenkantriebssystems 11 ergänzt bzw. unterstützt werden. Hierdurch kann die Leistungsfähigkeit der durch die mindestens eine zweite elektrische Maschine 33 des Lenkantriebssystems 11 ausgebildeten Funktionalität erhöht werden.

In einem regulären Fahrbetrieb des radseitengelenkten Fahrzeugs, in welchem das Antriebsaggregat 12 läuft und bei geschlossener Kupplung 38 an die Hauptleistungsverzweigungseinheit 17 gekoppelt ist, wird ein Teil der vom Antriebsaggregat 12 bereitgestellten Leistung in Richtung auf das Fahrgetriebe 13 und so über das Fahrgetriebe 13 in Richtung auf die Abtriebe 14, 15 übertragen, ein zweiter Teil dieser Antriebsleistung wird über die Hauptleistungsverzweigungseinheit 17 in das Lenkantriebssystem 11 eingespeist. Dabei kann dann die mindestens eine zweite elektrische Maschine 33 als Generator betrieben werden, um einen Teil dieser Leistung in elektrische Energie für den Antrieb der mindestens einen ersten elektrischen Maschine 29 zu wandeln. So kann dann ohne Notwendigkeit einer Traktionsbatterie das Lenkantriebssystem 11 autark betrieben werden.

Dann, wenn das Antriebsaggregat 12 abgeschaltet oder ausfällt oder blockiert ist, wird vorzugsweise die Kupplung 38 geöffnet, um das Antriebsaggregat 12 abzukoppeln. Sollte in diesem Zustand das radseitengelenkte Fahrzeug rollen und demnach kinetische Energie aufweisen, so kann diese an den Abtrieben 14, 15 vorhandene kinetische Energie genutzt werden, um das Fahrzeug über das Lenkantriebssystem 11 zu lenken.

Alternativ oder zusätzlich ist es möglich, kinetische Energie des radseitengelenkten Fahrzeugs in elektrische Energie zu wandeln, indem die kinetische Energie genutzt wird, um die mindestens eine zweite elektrische Maschine 33 und/oder die mindestens eine weitere elektrische Maschine 39 generatorisch zu betreiben.

Sollte bei geöffneter Kupplung 38 das Antriebsaggregat 12 abgekoppelt sein, und sollte das radseitengelenkte Fahrzeug zum Beispiel eine Traktionsbatterie aufweisen, so kann über die in der Traktionsbatterie bereitgehaltene elektrische Leistung sowohl die mindestens eine erste elektrische Maschine 29 als auch die mindestens eine zweite elektrische Maschine 33 des Lenkantriebssystems 11 und gegebenenfalls auch die weitere elektrische Maschine 39 der Fahrantriebssystems 10 jeweils motorisch betrieben werden, um einerseits ein Antreiben und andererseits ein Lenken des Fahrzeugs zu gewährleisten. Dabei muss die hierfür erforderliche Energie nicht in einer Traktionsbatterie bereitgehalten werden, es ist auch möglich, in diesem Fall eine Brennstoffzelle oder dergleichen zu nutzen, um dann die elektrische Maschine 29, 33, 39 mit elektrischer Energie zu versorgen.

Fig. 7 zeigt eine schematisierte Darstellung eines weiteren Lenkantriebssystems eines radseitengelenkten Fahrzeugs zusammen mit einem Fahrantriebssystem desselben. Die Anordnung der Fig. 7 entspricht hinsichtlich ihres Aufbaus größtenteils der Anordnung der Fig. 1, weshalb zur Vermeidung unnötiger Wiederholungen für die Anordnung der Fig. 7 gleiche Baugruppen verwendet werden wie für die Anordnung der Fig. 1. Nachfolgend wird nur auf solche Details eingegangen, durch die sich die Anordnung der Fig. 7 von der Anordnung der Fig. 1 unterscheidet. Hinsichtlich aller übrigen Details kann auf die obigen Ausführungen zu den Fig. 1 bis 6 verwiesen werden. In Fig. 7 ist die mindestens eine zweite elektrische Maschine 33 nicht an diejenige Welle 26 gekoppelt, an welche auch der erste Anschluss 25a der Leistungssummations- und/oder Leistungsverzweigungseinheit 25a gekoppelt ist, sondern an das Koppelelement 20 oder die Nullwelle 20. Weitere Unterschiede bestehen nicht.

Auch im Zusammenhang mit der Anordnung der Fig. 7 können die erfindungsgemäßen Verfahren genutzt werden. Mit der Anordnung der Fig. 7 ist es jedoch nicht möglich, dass eine als Generator betriebene zweite elektrische Maschine 33 des Lenkantriebssystems 11 einen ersten Teil der Antriebsleistung des Fahrantriebssystems 10, welche die Hauptleistungsverzweigungseinheit 17 an dem Lenkantriebssystem 11 bereitstellt, in elektrische Energie wandelt.

Mit der Anordnung der Fig. 7 kann jedoch die zweite elektrische Maschine 33 Antriebsleistung an der Nullwelle 20 in elektrische Energie wandeln.

Für die Figuren 8 bis 11 sind diejenigen Teile mit Bezugszeichen versehen, die sich von den in den schematisierten Darstellungen eines Lenkantriebssystems für ein bzw. eines radseitengelenkten Fahrzeugs zusammen mit einem Fahrantriebssystem des radseitengelenkten Fahrzeugs gezeigten, beispielhaften, Ausführungsformen in Fig. 1 und Fig. 7 bereits beschriebenen Merkmalen, bzw. Komponenten und/oder Baugruppen unterscheiden bzw. die zur Erklärung, insbesondere Erläuterung der Funktionsweise, einer anders angeordneten und/oder bisher noch nicht beschriebenen Komponente und/oder Baugruppe notwendig sind. Die (restlichen) Komponenten und/oder Baugruppen, die sich in der Darstellung zumindest im Wesentlichen nicht von den bereits in Fig. 1 und Fig. 7 gezeigten Komponenten und/oder Baugruppen unterscheiden, entsprechen eben diesen bereits beschriebenen Komponenten und/oder Baugruppen und sind daher (der Übersichtlichkeit halber) nicht mit Bezugszeichen versehen.

So zeigt Fig. 8 eine schematisierte Darstellung eines Lenkantriebssystems 11 für ein bzw. eines radseitengelenkten Fahrzeugs zusammen mit einem Fahrantriebssystem 10 des radseitengelenkten Fahrzeugs mit einer Leistungseinheit 35, die zwischen der ersten elektrischen Maschine 29 und dem zweiten Anschluss 25b der Leistungssummations- und/oder Leistungsverzweigungseinheit 25 angeordnet ist. Die Leistungseinheit 35 ist ausgebildet, die Welle 26, an welche auch der erste Anschluss 25a der Leistungssummations- und/oder Leistungsverzweigungseinheit 25 gekoppelt ist, parallel zur ersten elektrischen Maschine 29, insbesondere schlupfend, an die Leistungssummations- und/oder Leistungsverzweigungseinheit 25, in Fig. 8 beispielhaft deren zweiten Anschluss 25b, zu koppeln.

Fig. 9 zeigt eine schematisierte Darstellung eines Lenkantriebssystems 11 für ein bzw. eines radseitengelenkten Fahrzeugs zusammen mit einem Fahrantriebssystem 10 des radseitengelenkten Fahrzeugs bei der wenigstens zwei an das Koppelelement 20 gekoppelte Räderspuren einer Drehrichtungsumkehreinrichtung 98 gezeigt sind. Je nach Betriebszustand der Leistungseinheit 35, bzw. der Drehrichtungsumkehreinrichtung 98, ist die Welle 26 mit einer dem Betriebszustand entsprechenden Drehrichtung über eine der beiden Räderspuren der Drehrichtungsumkehreinrichtung 98 an das Koppelelement 20 gekoppelt. Die Drehrichtungsumkehr kann insbesondere über die Drehrichtungsumkehreinrichtung 98, bzw. durch deren Räderspuren, erfolgen und insbesondere nicht durch die Leistungseinheit 35.

In Fig. 10 ist eine schematisierte Darstellung eines Lenkantriebssystems 11 für ein bzw. eines radseitengelenkten Fahrzeugs zusammen mit einem Fahrantriebssystem 10 des radseitengelenkten Fahrzeugs gezeigt, bei dem der der Ausgang (dritter Anschluss 25c) mit zwei Räderspuren anstatt mit einer Räderspur an das Koppelelement 20 geschaltet ist. In anderen Worten ist das Wendegetriebe in Fig. 10 nicht in der Leistungssummations- und/oder Leistungsverzweigungseinheit 25, sondern zwischen Leistungssummations- und/oder Leistungsverzweigungseinheit 25 und Koppelelement 20 angeordnet. Je nach Betriebszustand koppelt das Wendegetriebe die Leistungssummations- und/oder Leistungsverzweigungseinheit 25 über, insbesondere über eine der zwei, die Räderspuren an das Koppelelement 20 mit einer dem Betriebszustand entsprechenden Drehrichtung. In anderen Worten wird der dritte Anschluss 25c der Leistungssummations- und/oder Leistungsverzweigungseinheit 25 über die beiden Räderspuren and Koppelelement 20 gekoppelt, alternativ und mit gegensinnigen Drehrichtungen.

Fig. 11 zeigt eine schematisierte Darstellung eines Lenkantriebssystems 11 für ein bzw. eines radseitengelenkten Fahrzeugs zusammen mit einem Fahrantriebssystem 10 des radseitengelenkten Fahrzeugs bei dem die erste elektrische Maschine 29 und die zweite elektrische Maschine 33 über ein definiertes Übersetzungsverhältnis, das ungleich Null ist, an die Eingangswellen der Leistungssummations- und/oder Leistungsverzweigungseinheit 25, insbesondere den ersten Anschluss 25a und den zweiten Anschluss 25b gekoppelt.

### Bezugszeichenliste

- 10: Fahrantriebssystem
- 11: Lenkantriebssystem
- 12: Antriebsaggregat
- 13: Fahrgetriebe
- 13a: Getriebeeingang
- 14: Abtrieb
- 15: Abtrieb
- 16: Welle
- 17: Hauptleistungsverzweigungseinheit
- 18: Stirnradstufe
- 18a: Zahnrad
- 18b: Zahnrad
- 18c: Zahnrad
- 19: Stirnradstufe
- 19a: Zahnrad
- 19b: Zahnrad
- 19c: Zahnrad
- 19d: Zahnrad
- 20: Koppelelement / Koppelglied / Nullwelle
- 21: Stirnradstufe
- 21a: Zahnrad
- 21b: Zahnrad
- 21c: Zahnrad
- 22: Überlagerungsgetriebe
- 23: Stirnradstufe
- 23a: Zahnrad
- 23b: Zahnrad
- 23c: Zahnrad
- 23d: Zahnrad
- 24: Überlagerungsgetriebe
- 25: Leistungssummations- und/oder Leistungsverzweigungseinheit
- 25a: erster Anschluss
- 25b: zweiter Anschluss
- 25c: dritter Anschluss
- 26: Welle
- 27: Anfahrelement
- 28: primärer Leistungseintrieb
- 29: erste elektrische Maschine
- 30: Antriebswelle
- 31: erste Leitungselektronik
- 32: Stirnradstufe
- 32a: Zahnrad
- 32b: Zahnrad
- 33: zweite elektrische Maschine
- 34: zweite Leitungselektronik
- 35: Leistungseinheit
- 36: Stirnradstufe
- 36a: Zahnrad
- 36b: Zahnrad
- 37: Wendegetriebe
- 38: Kupplung
- 39: elektrische Maschine

- 40: Planetenstufe
- 40a: Sonnenrad
- 40b: Steg
- 40c: Hohlrad
- 41: Planetenstufe
- 41a: Sonnenrad
- 41b: Steg
- 41c: Hohlrad
- 42: Planetenstufe
- 42a: Sonnenrad
- 42b: Steg
- 42c: Hohlrad
- 43: Planetenstufe
- 43a: Sonnenrad
- 43b: Steg
- 43c: Hohlrad
- 44: Planetenstufe
- 44a: Sonnenrad
- 44b: Steg
- 44c: Hohlrad
- 45: Schaltelement
- 46: Schaltelement
- 47: Schaltelement
- 48: Schaltelement

- 50: Planetenstufe
- 50a: Sonnenrad
- 50b: Steg
- 50c: Hohlrad
- 51: Planetenstufe
- 51a: Sonnenrad
- 51b: Steg
- 51c: Hohlrad
- 52: Planetenstufe
- 52a: Sonnenrad
- 52b: Steg
- 52c: Hohlrad
- 53: Planetenstufe
- 53a: Sonnenrad
- 53b: Steg
- 53c: Hohlrad
- 54: Schaltelement
- 55: Schaltelement
- 56: Schaltelement
- 60: Planetenstufe
- 60a: Sonnenrad
- 60b: Steg
- 60c: Hohlrad
- 61: Planetenstufe
- 61a: Sonnenrad
- 61b: Steg
- 61c: Hohlrad
- 62: Planetenstufe
- 62a: Sonnenrad
- 62b: Steg
- 62c: Hohlrad
- 63: Planetenstufe
- 63a: Sonnenrad
- 63b: Steg
- 63c: Hohlrad
- 64: Schaltelement
- 65: Schaltelement
- 66: Schaltelement
- 67: Schaltelement
- 68: Schaltelement

- 70: Planetenstufe
- 70a: Sonnenrad
- 70b: Steg
- 70c: Hohlrad
- 71: Planetenstufe
- 71a: Sonnenrad
- 71b: Steg
- 71c: Hohlrad
- 72: Planetenstufe
- 72a: Sonnenrad
- 72b: Steg
- 72c: Hohlrad
- 73: Planetenstufe
- 73a: Sonnenrad
- 73b: Steg
- 73c: Hohlrad
- 74: Planetenstufe
- 74a: Sonnenrad
- 74b: Steg
- 74c: Hohlrad
- 75: Planetenstufe
- 75a: Sonnenrad
- 75b: Steg
- 75c: Hohlrad
- 76: Schaltelement
- 77: Schaltelement
- 78: Schaltelement
- 79: Schaltelement
- 80: Schaltelement

- 90: Planetenstufe
- 90a: Sonnenrad
- 90b: Steg
- 90c: Hohlrad
- 91: Planetenstufe
- 91a: Sonnenrad
- 91b: Steg
- 91c: Hohlrad
- 92: Planetenstufe
- 92a: Sonnenrad
- 92b: Steg
- 92c: Hohlrad
- 93: Planetenstufe
- 93a: Sonnenrad
- 93b: Steg
- 93c: Hohlrad
- 94: Schaltelement
- 95: Schaltelement
- 96: Schaltelement
- 97: Schaltelement
- 98: Drehrichtungsumkehreinrichtung

## Patentansprüche

1. Lenkantriebssystem (11) für ein radseitengelenktes Fahrzeug,
mit einem Koppelelement (20), das mit Abtrieben (14, 15) des Fahrzeugs koppelbar ist, um dann, wenn ein Betrag einer Überlagerungsdrehzahl des Koppelelements (20) größer als Null ist, an den Abtrieben (14, 15), die ausgehend von einem Fahrantriebssystem (10) des Fahrzeugs mit einer Grunddrehzahl angetrieben sind, zur Lenkung des Fahrzeugs eine der Grunddrehzahl zu überlagernde Überlagerungsdrehzahl bereitzustellen,
mit mindestens einer ersten elektrischen Maschine (29), deren Drehzahl variabel einstellbar oder regelbar ist,
mit einer Leistungssummations- und/oder Leistungsverzweigungseinheit (25),
wobei ein erster Anschluss (25a) der Leistungssummations- und/oder Leistungsverzweigungseinheit (25) an eine Welle (26) gekoppelt ist, die, insbesondere über ein definiertes Übersetzungsverhältnis, mit einer Welle (16) des Fahrantriebssystems (10) koppelbar ist,
wobei ein zweiter Anschluss (25b) der Leistungssummations- und/oder Leistungsverzweigungseinheit (25) an die mindestens eine erste elektrische Maschine (29) gekoppelt ist,
wobei ein dritter Anschluss (25c) der Leistungssummations- und/oder Leistungsverzweigungseinheit (25), insbesondere über wenigstens ein definiertes Übersetzungsverhältnis, an das Koppelelement (20) gekoppelt ist, wobei ein Wendegetriebe (37) nach einer Überlagerung der Leistung, die von der Welle (26), an die der erste Anschluss (25a) der Leistungssummations- und/oder Leistungsverzweigungseinheit (25) gekoppelt ist, insbesondere von dem ersten Anschluss (25a), bereitgestellt wird, mit der Leistung, die von der mindestens einen ersten elektrischen Maschine (29), insbesondere von dem zweiten Anschluss (25b), bereitgestellt wird, angeordnet ist.

2. Lenkantriebssystem nach Anspruch 1, wobei das Lenkantriebssystem (11) eine parallel zur Leistungssummations- und/oder Leistungsverzweigungseinheit (25) geschalteten Leistungseinheit (35) aufweist, die ausgebildet ist, die Welle (26), an welche auch der erste Anschluss (25a) der Leistungssummations- und/oder Leistungsverzweigungseinheit (25) gekoppelt ist, parallel zur Leistungssummations- und/oder Leistungsverzweigungseinheit (25), insbesondere schlupfend, an das Koppelelement (20) zu koppeln.

3. Lenkantriebssystem nach Anspruch 1, wobei der zweite Anschluss der Leistungssummations- und/oder Leistungsverzweigungseinheit drehzahlgleich an die mindestens eine erste elektrische Maschine gekoppelt ist oder wobei der zweite Anschluss der Leistungssummations- und/oder Leistungsverzweigungseinheit über ein definiertes Übersetzungsverhältnis an die mindestens eine erste elektrische Maschine gekoppelt ist.

4. Lenkantriebssystem nach einem der vorhergehenden Ansprüche, wobei mit der mindestens einen ersten elektrischen Maschine (29) jeweils mindestens eine erste Leistungselektronik (31) zusammenwirkt, die ausgebildet ist, die Drehzahl der jeweiligen ersten elektrischen Maschine (29) zu regeln, und/oder wobei die jeweilige erste elektrische Maschine (29) mit elektrisch getrennten Phasen ausgeführt ist; und/oder mit mindestens einer zweiten elektrische Maschine (33), die an diejenige Welle (26) gekoppelt ist, an welche auch der erste Anschluss (25a) der Leistungssummations- und/oder Leistungsverzweigungseinheit (25) gekoppelt ist und/oder
mit mindestens einer zweiten elektrischen Maschine (33), die an das Koppelelement (20) gekoppelt ist.

5. Lenkantriebssystem nach dem vorhergehenden Anspruch, wobei mit der mindestens einen zweiten elektrischen Maschine (33) jeweils mindestens eine zweite Leistungselektronik (34) zusammenwirkt, die ausgebildet ist, die Drehzahl der jeweiligen zweiten elektrische Maschine (33) zu regeln, und/oder wobei die jeweilige zweite elektrische Maschine (33) mit elektrisch getrennten Phasen ausgeführt ist; und/oder mit mindestens einer elektrischen Maschine (33; 39), die dazu ausgebildet ist, in einem generatorischen Betrieb die mindestens eine erste elektrische Maschine (29), insbesondere direkt, mit elektrischer Energie zu versorgen, und/oder dazu ausgebildet ist, in einem motorischen Betrieb von der mindestens einen ersten elektrischen Maschine (29), insbesondere direkt, mit elektrischer Energie versorgt zu werden; und/oder
wobei die Leistungseinheit (35) ausgebildet ist, die Welle, an welche auch der erste Anschluss der Leistungssummations- und/oder Leistungsverzweigungseinheit gekoppelt ist, parallel zur Leistungssummations- und/oder Leistungsverzweigungseinheit in einem Betriebszustand der Leistungseinheit mit einer Drehrichtung und in einem anderen Betriebszustand der Leistungseinheit mit einer hierzu entgegengesetzten Drehrichtung an das Koppelelement zu koppeln, insbesondere eine Drehrichtungsumkehreinrichtung vorgesehen ist, die wenigstens eine an das Koppelelement gekoppelte Räderspur, die ausgebildet ist, in dem einen Betriebszustand der Leistungseinheit durch die Welle angetrieben zu werden und das Koppelelement mit einer Drehrichtung zu drehen, und in dem anderen Betriebszustand der Leistungseinheit durch die Welle angetrieben zu werden und das Koppelelement mit einer zu dieser Drehrichtung entgegengesetzten Drehrichtung zu drehen, oder wenigstens zwei an das Koppelelement gekoppelte Räderspuren aufweist, von denen die eine Räderspur ausgebildet ist, in dem einen Betriebszustand der Leistungseinheit die Welle, an welche auch der erste Anschluss der Leistungssummations- und/oder Leistungsverzweigungseinheit gekoppelt ist, mit einer Drehrichtung an das Koppelelement zu koppeln, und von denen die andere Räderspur ausgebildet ist, in dem anderen Betriebszustand der Leistungseinheit die Welle, an welche auch der erste Anschluss der Leistungssummations- und/oder Leistungsverzweigungseinheit gekoppelt ist, mit einer hierzu entgegengesetzten Drehrichtung an das Koppelelement zu koppeln.

6. Lenkantriebssystem nach einem der vorhergehenden Ansprüche, mit einer, insbesondere zwischen der ersten elektrischen Maschine und dem zweiten Anschluss der Leistungssummations- und/oder Leistungsverzweigungseinheit angeordneten, Leistungseinheit (35), die ausgebildet ist, die Welle, an welche auch der erste Anschluss der Leistungssummations- und/oder Leistungsverzweigungseinheit gekoppelt ist, parallel zur ersten elektrischen Maschine, insbesondere schlupfend, an die Leistungssummations- und/oder Leistungsverzweigungseinheit, insbesondere deren zweiten Anschluss, zu koppeln; und/oder wobei die Leistungseinheit (35) eine schaltbare Reibkupplung oder eine hydrodynamische Kupplung aufweist, insbesondere ist.

7. Lenkantriebssystem nach einem der vorhergehenden Ansprüche, wobei das zwischen Leistungssummations- und/oder Leistungsverzweigungseinheit (25) und Koppelelement (20) geschaltete Wendegetriebe wenigstens zwei an das Koppelelement gekoppelte Räderspuren aufweist, von denen die eine Räderspur ausgebildet ist, in einem Betriebszustand des Wendegetriebes das Koppelelement durch die Leistungssummations- und/oder Leistungsverzweigungseinheit mit einer Drehrichtung anzutreiben, und die andere Räderspur ausgebildet ist, in einem anderen Betriebszustand des Wendegetriebes das Koppelelement durch die Leistungssummations- und/oder Leistungsverzweigungseinheit mit einer zu dieser Drehrichtung entgegengesetzten Drehrichtung anzutreiben.

8. Lenkantriebssystem nach einem der vorhergehenden Ansprüche, wobei die Leistungssummations- und/oder Leistungsverzweigungseinheit (25) ausgebildet ist, um in einem ersten Betriebszustand den ersten Anschluss (25a) und den zweiten Anschluss (25b) in mindestens einem Überlagerungsbetrieb an den dritten Anschluss (25c) zu koppeln, insbesondere um in einem zweiten Betriebszustand den ersten Anschluss (25a) und/oder den zweiten Anschluss (25b) in mindestens einem Festübersetzungsbetrieb an den dritten Anschluss (25c) zu koppeln, insbesondere den ersten Anschluss, insbesondere wenigstens bei lastfreiem zweiten Anschluss, in einem festen Übersetzungsverhältnis an den dritten Anschluss zu koppeln, insbesondere wobei die Leistungssummations- und/oder Leistungsverzweigungseinheit (25) ausgebildet ist, um in einem dritten Betriebszustand einen Mischbetrieb zwischen dem ersten und zweiten Betriebszustand bereitzustellen; und/oder wobei die Leistungssummations- und/oder Leistungsverzweigungseinheit (25) einen oder mehrere Planetensätze und/oder ein oder mehrere Schaltelemente aufweist, insbesondere wobei mindestens zwei Planetensätze und mindestens zwei Schaltelemente das in die Leistungssummations- und/oder Leistungsverzweigungseinheit (25) integrierte Wendegetriebe (37) bilden, und/oder wobei mindestens zwei Räderspuren, mit denen jeweils mindestens ein Schaltelement, insbesondere eine Kupplung, gekoppelt ist, das zwischen Leistungssummations- und/oder Leistungsverzweigungseinheit und Koppelelement geschaltete Wendegetriebe bilden, /oder wobei mindestens zwei Planetensätze und/oder mindestens ein Schaltelement abhängig von der Schaltstellung der Schaltelemente an der Bereitstellung der unterschiedlichen Betriebszustände der Leistungssummations- und/oder Leistungsverzweigungseinheit (25) beteiligt sind.

9. Lenkantriebssystem nach einem der vorhergehenden Ansprüche, wobei die Leistungssummations- und/oder Leistungsverzweigungseinheit (25) wenigstens einen Planetensatz und/oder insbesondere höchstens sechs Planetensätze, insbesondere genau vier, fünf, oder sechs Planetensätze, aufweist und/oder wobei die Leistungssummations- und/oder Leistungsverzweigungseinheit (25) wenigstens ein Schaltelement, oder höchstens fünf Schaltelemente, insbesondere genau zwei, drei, vier oder fünf Schaltelemente, aufweist, wobei wenigstens ein Schaltelement oder mehrere als Bremse ausgebildet sind, und/oder wobei wenigstens ein Schaltelement oder mehrere als Kupplung ausgebildet sind, oder wobei alle Schaltelemente als Bremse oder als Kupplung ausgebildet sind.

10. Radseitengelenktes Fahrzeug,
mit einem mindestens ein Antriebsaggregat (12), ein Fahrgetriebe (13) und eine Hauptleistungsverzweigungseinheit (17) aufweisenden Fahrantriebssystem (10),
mit einem Lenkantriebssystem (11) nach einem der vorhergehenden Ansprüche,
wobei die Welle (26) des Lenkantriebssystems (11), an welche auch der erste Anschluss (25a) der Leistungssummations- und/oder Leistungsverzweigungseinheit (25) gekoppelt ist, an die Hauptleistungsverzweigungseinheit (17) gekoppelt ist, und/oder das Koppelelement (20) mit Abtrieben (14, 15) des Fahrzeugs gekoppelt ist.

11. Radseitengelenktes Fahrzeug nach dem vorhergehenden Anspruch,
wobei das Fahrantriebssystem (10) eine schaltbare Kupplung (38) aufweist, die ausgebildet ist, das mindestens eine Antriebsaggregat (12) an die Hauptleistungsverzweigungseinheit (17) anzukoppeln und von der Hauptleistungsverzweigungseinheit (17) abzukoppeln; und/oder wobei das Fahrantriebssystem (10) mindestens eine weitere elektrische Maschine (39) aufweist, wobei die mindestens eine weitere elektrische Maschine (39) eingerichtet ist, dann, wenn die mindestens eine zweite elektrische Maschine (33) an diejenige Welle (26) gekoppelt ist, an welche auch der erste Anschluss (25a) der Leistungssummations- und/oder Leistungsverzweigungseinheit (25a) gekoppelt ist, von der mindestens einen zweiten elektrischen Maschine (33) des Lenkantriebssystems (11) bereitgestellte Funktionen des Lenkantriebssystem (11) zu unterstützen.

12. Verfahren zum Betreiben eines radseitengelenkten Fahrzeugs nach einem der Ansprüche 10 bis 11,
wobei die mindestens eine erste elektrische Maschine (29) des Lenkantriebssystems (11) als Motor betrieben wird,
wobei die mindestens eine zweite elektrische Maschine (33) des Lenkantriebssystems (11) als Generator betrieben wird,
wobei die von der mindestens einen zweiten elektrischen Maschine (33) des Lenkantriebssystems (11) bereitgestellte elektrische Energie für das Antreiben der mindestens einen ersten elektrischen Maschine (29) des Lenkantriebssystems (11) genutzt wird,
wobei die von der mindestens einen ersten elektrischen Maschine (29) des Lenkantriebssystems (11) am zweiten Anschluss (25b) der Leistungssummations- und/oder Leistungsverzweigungseinheit (25) bereitgestellte Leistung zusammen mit einem zweiten Teil der Antriebsleistung des Fahrantriebssystems (10), welche die Hauptleistungsverzweigungseinheit (17) an dem Lenkantriebssystem (11) bereitstellt und welche am ersten Anschluss (25a) der Leistungssummations- und/oder Leistungsverzweigungseinheit (25) anliegt, am dritten Anschluss (25c) der Leistungssummations- und/oder Leistungsverzweigungseinheit (25) überlagert bereitgestellt wird, vorzugsweise
wobei dann, wenn die mindestens eine zweite elektrische Maschine (33) an diejenige Welle (26) gekoppelt ist, an welche auch der erste Anschluss (25a) der Leistungssummations- und/oder Leistungsverzweigungseinheit (25) gekoppelt ist, die mindestens eine als Generator betriebene zweite elektrische Maschine (33) des Lenkantriebssystems (11) einen ersten Teil der Antriebsleistung des Fahrantriebssystems (10), welche die Hauptleistungsverzweigungseinheit (17) an dem Lenkantriebssystem (11) bereitstellt, in elektrische Energie wandelt.

13. Verfahren zum Betreiben eines radseitengelenkten Fahrzeugs nach einem der Ansprüche 10 bis 11, insbesondere Verfahren nach dem vorhergehenden Anspruch,
wobei, insbesondere in einem zu einem Betriebszustand, in dem die mindestens eine erste elektrische Maschine als Generator und die mindestens eine zweite elektrische Maschine als Motor betrieben werden, alternativen Betriebszustand, die mindestens eine erste elektrische Maschine (29) des Lenkantriebssystems (11) als Generator betrieben wird,
die mindestens eine zweite elektrische Maschine (33) des Lenkantriebssystems (11) als Motor betrieben wird,
die Leistungssummations- und/oder Leistungsverzweigungseinheit (25) Antriebsleistung des Fahrantriebssystems (10), welche die Hauptleistungsverzweigungseinheit (17) an dem Lenkantriebssystem (11) bereitstellt und welche am ersten Anschluss (25a) der Leistungssummations- und/oder Leistungsverzweigungseinheit (25) anliegt, verzweigt und teilweise am zweiten Anschluss (25b) der Leistungssummations- und/oder Leistungsverzweigungseinheit (25) sowie teilweise am dritten Anschluss (25c) der Leistungssummations- und/oder Leistungsverzweigungseinheit (25) bereitstellt,
die mindestens eine als Generator betriebene erste elektrische Maschine (29) den am zweiten Anschluss (25b) anliegenden Teil der der Antriebsleistung in elektrische Energie wandelt, und
die von der mindestens einen ersten elektrischen Maschine (29) bereitgestellte elektrische Energie für das Antreiben der mindestens einen zweiten elektrischen Maschine (33) des Lenkantriebssystems (11) genutzt wird.

14. Verfahren zum Betreiben eines radseitengelenkten Fahrzeugs nach Anspruch 10 oder 11, insbesondere Verfahren nach einem der Ansprüche 12 bis 13,
wobei dann, wenn das mindestens eine Antriebsaggregat (12) des Fahrantriebssystems (10) stillgesetzt oder ausgefallen ist, die Kupplung (38) des Fahrantriebssystems geöffnet und das mindestens eine Antriebsaggregat (12) von der Hauptleistungsverzweigungseinheit (17) abgekoppelt wird,
wobei kinetische Energie des Fahrzeugs zur Lenkung des Fahrzeugs genutzt wird, vorzugsweise
wobei dann, wenn die mindestens eine zweite elektrische Maschine (33) an diejenige Welle (26) gekoppelt ist, an welche auch der erste Anschluss (25a) der Leistungssummations- und/oder Leistungsverzweigungseinheit (25) gekoppelt ist, die kinetische Energie des Fahrzeugs über die mindestens eine als Generator betriebene zweite elektrische Maschine (33) des Lenkantriebssystems (11) in elektrische Energie gewandelt wird, und/oder wobei die kinetische Energie des Fahrzeugs über die mindestens eine weitere elektrische Maschine (39) in elektrische Energie gewandelt wird.

15. Verfahren zum Betreiben eines radseitengelenkten Fahrzeugs nach Anspruch 10 oder 11, insbesondere Verfahren nach einem der Ansprüche 12 bis 13,
wobei dann, wenn das mindestens eine Antriebsaggregat (12) des Fahrantriebssystems (10) stillgesetzt oder ausgefallen ist, die Kupplung (38) des Fahrantriebssystems geöffnet und das mindestens eine Antriebsaggregat (12) von der Hauptleistungsverzweigungseinheit (17) abgekoppelt wird,
wobei die erste elektrische Maschine (29) des Lenkantriebssystems (11) und gegebenenfalls die weitere elektrische Maschine (39) des Fahrantriebssystems (10) und/oder die zweite elektrische Maschine (33) des Lenkantriebssystems (11) zum Antreiben und/oder Lenken des Fahrzeugs genutzt wird.

## Claims

1. A steering drive system (11) for a wheel-steered vehicle,
comprising a coupling element (20), which can be coupled to the vehicle's output shafts (14, 15), so that, when the magnitude of the superimposed rotational speed of the coupling element (20) is greater than zero, which are driven by a drive system (10) of the vehicle at a base speed, to provide a superimposed speed to be superimposed on the base speed for steering the vehicle,
using at least a first electric machine (29) whose speed is variably adjustable or controllable,
with a power summing and/or power splitting unit (25),
wherein a first connection (25a) of the power summing and/or power splitting unit (25) is coupled to a shaft (26), which, in particular via a defined transmission ratio, can be coupled to a shaft (16) of the drive system (10),
wherein a second connection (25b) of the power summing and/or power splitting unit (25) is coupled to the at least one first electric machine (29),
wherein a third connection (25c) of the power summing and/or power splitting unit (25) is coupled to the coupling element (20), in particular via at least one defined transmission ratio, wherein a reversing gearbox (37) is provided after superposition of the power from the shaft (26), to which the first connection (25a) of the power summing and/or power splitting unit (25) is coupled, in particular from the first connection (25a), with the power provided by the at least one first electric machine (29), in particular from the second connection (25b).

2. The steering drive system according to claim 1, wherein the steering drive system (11) comprises a power unit (35) connected in parallel with the power summing and/or power splitting unit (25), which is configured to drive the shaft (26), to which the first connection (25a) of the power summing and/or power splitting unit (25) is also coupled, to the coupling element (20) in parallel with the power summing and/or power splitting unit (25), in particular with slippage.

3. The steering drive system according to claim 1, wherein the second connection of the power summing and/or power splitting unit is coupled at the same rotational speed to the at least one first electric machine, or wherein the second connection of the power summing and/or power splitting unit is coupled to the at least one first electric machine via a defined transmission ratio.

4. The steering drive system according to one of the preceding claims, wherein at least one first electrical machine (29) interacts with the, in each case with at least one first power electronics unit (31) configured to control the rotational speed of the respective first electrical machine (29), and/or wherein the respective first electrical machine (29) is designed with electrically isolated phases ; and/or with at least one second electric machine (33) coupled to the shaft (26) to which the first connection (25a) of the power summing and/or power splitting unit (25) is also coupled and/or
with at least one second electric machine (33) coupled to the coupling element (20).

5. The steering drive system according to the preceding claims, wherein at least one second electric machine (33) cooperates with at least one second power electronics unit (34) ( ), which is configured to control the rotational speed of the respective second electric machine (33), and/or wherein the respective second electric machine (33) is designed with electrically isolated phases; and/or with at least one electric machine (33; 39) that is configured to supply the at least one first electric machine (29) with electrical energy, in particular directly, in generator mode, and/or is configured to be supplied with electrical energy, in particular directly, by the at least one first electric machine (29) in motor mode; and/or
wherein the power unit (35) is configured such that the shaft to which the first connection of the power summing and/or power splitting unit is also coupled to the coupling element in parallel with the power summing and/or power splitting unit, in one operating state of the power unit with a rotational direction and in another operating state of the power unit with a rotational direction opposite thereto, in particular, a direction-of-rotation reversal device is provided, comprising at least one gear track coupled to the coupling element, which is configured to be driven by the shaft in one operating state of the power unit and to rotate the coupling element in one direction of rotation, and in the other operating state of the power unit to be driven by the shaft and to rotate the coupling element in a direction opposite to this direction of rotation, or comprises at least two wheel tracks coupled to the coupling element, one of which is configured, in one operating state of the power unit, to couple the shaft to which the first connection of the power summing and/or power splitting unit is also coupled to the coupling element in a rotational direction, and of which the other track is configured to couple the shaft to which the first connection of the power summing and/or power splitting unit is also coupled to the coupling element in the other operating state of the power unit with a rotational direction opposite to the former.

6. The steering drive system according to one of the preceding claims, comprising a power unit (35) arranged, in particular, between the first electric machine and the second connection of the power summing and/or power splitting unit, which power unit is configured to couple the shaft, to which the first connection of the power summing and/or power splitting unit is also coupled, in parallel with the first electric machine, in particular with slippage, to the power summing and/or power splitting unit, in particular to its second connection; and/or wherein the power unit (35) comprises a switchable friction clutch or a hydrodynamic clutch, in particular .

7. The steering drive system according to one of the preceding claims, wherein the reversing gearbox (20) comprises at least two gear tracks coupled to the coupling element, one of which is configured such that, in one operating state of the reversing gearbox, the coupling element is driven by the power summing and/or power splitting unit in one direction of rotation, and the other gear train is configured to drive the coupling element, in another operating state of the reversing gearbox, via the power summing and/or power splitting unit in a direction of rotation opposite to said direction of rotation.

8. The steering drive system according to any one of the preceding claims, wherein the power summing and/or power splitting unit (25) is configured to couple the first terminal (25a) and the second terminal (25b) to the third terminal (25c), in particular to couple, in a second operating state, the first connection (25a) and/or the second connection (25b) to the third connection (25c), in particular to couple the first port, in particular at least when the second port is unloaded, to the third port at a fixed gear ratio, in particular wherein the power summing and/or power splitting unit (25) is configured to provide, in a third operating state, a mixed mode between the first and second operating states; and/or wherein the power summing and/or power splitting unit (25) comprises one or more planetary gear sets and/or one or more switching elements, in particular wherein at least two planetary gear sets and at least two switching elements form the reversing gearbox (37) integrated into the power summing and/or power splitting unit (25), and/or wherein at least two gear tracks, each of which is coupled to at least one shifting element, in particular a clutch, form the reversing gearbox connected between the power summing and/or power splitting unit and the coupling element, /or wherein at least two planetary gear sets and/or at least one shifting element are involved in providing the different operating states of the power summing and/or power splitting unit (25) depending on the shifting position of the shifting elements.

9. The steering drive system according to one of the preceding claims, wherein the power summing and/or power splitting unit (25) comprises at least one planetary gear set and/or, in particular, at most six planetary gear sets, specifically exactly four, five, or six planetary gear sets, and/or wherein the power summing and/or power splitting unit (25) comprises at least one shifting element, or at most five switching elements, in particular exactly two, three, four, or five switching elements, wherein at least one switching element or several are designed as brakes, and/or wherein at least one switching element or several are designed as clutches, or wherein all switching elements are designed as brakes or as clutches.

10. A wheel-steered vehicle,
comprising a drive system (10) that includes at least a drive unit (12), a transmission (13), and a main power splitting unit (17),
with a steering drive system (11) according to one of the preceding claims,
wherein the shaft (26) of the steering drive system (11), to which the first connection (25a) of the power summing and/or power splitting unit (25) is also coupled, is coupled to the main power splitting unit (17), and/or the coupling element (20) is coupled to output shafts (14, 15) of the vehicle.

11. The wheel-steered vehicle according to the preceding claim,
wherein the drive system (10) comprises a switchable clutch (38) configured to couple the at least one drive unit (12) to the main power splitting unit (17) and to decouple it from the main power splitting unit (17); and/or wherein the drive system (10) comprises at least one further electric machine (39), wherein the at least one further electric machine (39) is configured such that, when the at least one second electric machine (33) is coupled to the shaft (26) to which the first connection (25a) of the power summing and/or power splitting unit (25a) is coupled, to support functions of the steering drive system (11) provided by the at least one second electric machine (33) of the steering drive system (11).

12. A method for operating a wheel-steered vehicle according to any one of claims 10 to 11,
wherein the at least one first electric machine (29) of the steering drive system (11) is operated as a motor,
wherein the at least one second electric machine (33) of the steering drive system (11) is operated as a generator,
wherein the electrical energy provided by the at least one second electric machine (33) of the steering drive system (11) is used to drive the at least one first electric machine (29) of the steering drive system (11),
wherein the power supplied by the at least one first electric machine (29) of the steering drive system (11) to the second connection (25b) of the power summing and/or power splitting unit (25) is combined with a second portion of the drive power of the vehicle drive system (10), which is supplied by the main power splitting unit (17) to the steering drive system (11) and which is applied to the first terminal (25a) of the power summing and/or power splitting unit (25), is superimposed and supplied to the third terminal (25c) of the power summing and/or power splitting unit (25), preferably
wherein when the at least one second electric machine (33) is coupled to the shaft (26) to which the first connection (25a) of the power summing and/or power splitting unit (25) is coupled, wherein at least one second electric machine (33) of the steering drive system (11) operated as a generator provides a first portion of the drive power of the vehicle drive system (10), which the main power splitting unit (17) provides to the steering drive system (11), into electrical energy t .

13. The method for operating a wheel-steered vehicle according to any one of claims 10 to 11, in particular the method according to the preceding claim,
wherein, in particular in an alternative operating state to an operating state in which the at least one first electric machine is operated as a generator and the at least one second electric machine is operated as a motor, the at least one first electric machine (29) of the steering drive system (11) is operated as a generator,
the at least one second electric machine (33) of the steering drive system (11) is operated as a motor,
the power summing and/or power splitting unit (25) branches the drive power of the drive system (10), which is provided by the main power splitting unit (17) to the steering drive system (11) and which is applied to the first connection (25a) of the power summing and/or power splitting unit (25) and supplies it partly to the second terminal (25b) of the power summing and/or power splitting unit (25) and partly to the third terminal (25c) of the power summing and/or power splitting unit (25),
the at least one first electric machine (29) operated as a generator converts the portion of the drive power present at the second connection (25b) into electrical energy, and
the electrical energy provided by the at least one first electric machine (29) is used to drive the at least one second electric machine (33) of the steering drive system (11).

14. The method for operating a wheel-steered vehicle according to claim 10 or 11, in particular a method according to any of claims 12 to 13,
wherein, when the at least one drive unit (12) of the drive system (10) is stopped or has failed, the clutch (38) of the drive system is opened and the at least one drive unit (12) is decoupled from the main power splitting unit (17),
wherein the vehicle's kinetic energy is used to steer the vehicle, preferably,
wherein, when the at least one second electric machine (33) is coupled to the shaft (26) to which the first connection (25a) of the power summing and/or power splitting unit (25), the kinetic energy of the vehicle is converted into electrical energy via the at least one second electric machine (33) of the steering drive system (11) operating as a generator, and/or wherein the kinetic energy of the vehicle is converted into electrical energy via the at least one further electric machine (39).

15. The method for operating a wheel-steered vehicle according to claim 10 or 11, in particular a method according to one of claims 12 to 13,
wherein, when the at least one drive unit (12) of the drive system (10) is stopped or has failed, the clutch (38) of the drive system is opened and the at least one drive unit (12) is decoupled from the main power splitting unit (17),
wherein the first electric motor (29) of the steering drive system (11) and, if applicable, the additional electric motor (39) of the drive system (10) and/or the second electric motor (33) of the steering drive system (11) are used to drive and/or steer the vehicle.

## Revendications

1. Système d'entraînement de direction (11) pour un véhicule à roues directrices,
avec un élément de couplage (20), qui peut être couplé à des sorties (14, 15) du véhicule pour fournir ensuite, lorsqu'une valeur d'une vitesse de rotation de superposition de l'élément de couplage (20) est supérieure à zéro, aux sorties (14, 15), qui sont entraînées à une vitesse de rotation de base à partir d'un système d'entraînement de déplacement (10) du véhicule, une vitesse de rotation de superposition à superposer à la vitesse de rotation de base pour la direction du véhicule, avec au moins une première machine électrique (29), dont la vitesse de rotation peut être réglée ou régulée de manière variable,
avec une unité de sommation de puissance et/ou de dérivation de puissance (25),
dans lequel un premier raccord (25a) de l'unité de sommation de puissance et/ou de dérivation de puissance (25) est couplé à un arbre (26), qui peut être couplé, en particulier par l'intermédiaire d'un rapport de démultiplication défini, à un arbre (16) du système d'entraînement de déplacement (10),
dans lequel un deuxième raccord (25b) de l'unité de sommation de puissance et/ou de dérivation de puissance (25) est couplé à l'au moins une première machine électrique (29),
dans lequel un troisième raccord (25c) de l'unité de sommation de puissance et/ou de dérivation de puissance (25), est couplé, en particulier par l'intermédiaire d'au moins un rapport de démultiplication défini, à l'élément de couplage (20), dans lequel un réducteur d'inversion (37) est disposé après une superposition de la puissance, qui est fournie par l'arbre (26), auquel est couplé le premier raccord (25a) de l'unité de sommation de puissance et/ou de dérivation de puissance (25), en particulier par le premier raccord (25a), à la puissance, qui est fournie par l'au moins une première machine électrique (29), en particulier par le deuxième raccord (25b).

2. Système d'entraînement de direction selon la revendication 1, dans lequel le système d'entraînement de direction (11) présente une unité de puissance (35) branchée en parallèle à l'unité de sommation de puissance et/ou de dérivation de puissance (25), laquelle est réalisée pour coupler l'arbre (26), auquel est également couplé le premier raccord (25a) de l'unité de sommation de puissance et/ou de dérivation de puissance (25), parallèlement à l'unité de sommation de puissance et/ou de dérivation de puissance (25), en particulier par patinage, à l'élément de couplage (20).

3. Système d'entraînement de direction selon la revendication 1, dans lequel le deuxième raccord de l'unité de sommation de puissance et/ou de dérivation de puissance est couplé à la même vitesse de rotation à l'au moins une première machine électrique ou dans lequel le deuxième raccord de l'unité de sommation de puissance et/ou de dérivation de puissance est couplé à l'au moins une première machine électrique par l'intermédiaire d'un rapport de démultiplication défini.

4. Système d'entraînement de direction selon l'une quelconque des revendications précédentes, dans lequel au moins une première électronique de puissance (31), qui est réalisée pour réguler la vitesse de rotation de la première machine électrique (29) respective, coopère respectivement avec l'au moins une première machine électrique (29), et/ou dans lequel la première machine électrique (29) respective est réalisée avec des phases électriquement séparées ; et/ou avec au moins une deuxième machine électrique (33), qui est couplée à l'arbre (26), auquel précisément est également couplé le premier raccord (25a) de l'unité de sommation de puissance et/ou de dérivation de puissance (25) et/ou
avec au moins une deuxième machine électrique (33), qui est couplée à l'élément de couplage (20).

5. Système d'entraînement de direction selon la revendication précédente, dans lequel au moins une deuxième électronique de puissance (34), qui est réalisée pour réguler la vitesse de rotation de la deuxième machine électrique (33) respective, coopère avec l'au moins une deuxième machine électrique (33), et/ou dans lequel la deuxième machine électrique (33) respective est réalisée avec des phases électriquement séparées ; et/ou avec au moins une machine électrique (33 ; 39), qui est réalisée pour alimenter en énergie électrique, en particulier directement, l'au moins une première machine électrique (29) dans un mode générateur, et/ou est réalisée pour être alimentée en énergie électrique, au moins directement, par l'au moins une première machine électrique (29), dans un mode moteur ; et/ou
dans lequel l'unité de puissance (35) est réalisée pour coupler l'arbre, auquel est également couplé le premier raccord de l'unité de sommation de puissance et/ou de dérivation de puissance, parallèlement à l'unité de sommation de puissance et/ou de dérivation de puissance dans un état de fonctionnement de l'unité de puissance avec une direction de rotation et dans un autre état de fonctionnement de l'unité de puissance avec une direction de rotation opposée à celle-ci, à l'élément de couplage, en particulier un dispositif d'inversion de direction de rotation est prévu, lequel présente au moins une piste de roue couplée à l'élément de couplage, qui est réalisée pour être entraînée par l'arbre dans un état de fonctionnement de l'unité de puissance et pour faire tourner l'élément de couplage dans une direction de rotation, et pour être entraînée par l'arbre dans l'autre état de fonctionnement de l'unité de puissance et pour faire tourner l'élément de couplage dans une direction de rotation opposée à ladite direction de rotation, ou au moins deux pistes de roue couplées à l'élément de couplage, dont l'une est réalisée pour coupler, dans un état de fonctionnement de l'unité de puissance, l'arbre, auquel est également couplé le premier raccord de l'unité de sommation de puissance et/ou de dérivation de puissance, avec une direction de rotation à l'élément de couplage, et dont l'autre est réalisée pour coupler, dans l'autre état de fonctionnement de l'unité de puissance, l'arbre, auquel est également couplé le premier raccord de l'unité de sommation de puissance et/ou de dérivation de puissance, avec une direction de rotation opposée à celle-ci à l'élément de couplage.

6. Système d'entraînement de direction selon l'une quelconque des revendications précédentes, avec une unité de puissance (35) disposée en particulier entre la première machine électrique et le deuxième raccord de l'unité de sommation de puissance et/ou de dérivation de puissance, qui est réalisée pour coupler l'arbre, auquel est également couplé le premier raccord de l'unité de sommation de puissance et/ou de dérivation de puissance, parallèlement à la première machine électrique, en particulier par patinage, à l'unité de sommation de puissance et/ou de dérivation de puissance, en particulier à son deuxième raccord ; et/ou dans lequel l'unité de puissance (35) présente, en particulier est, un embrayage à friction commutable ou un embrayage hydrodynamique.

7. Système d'entraînement de direction selon l'une quelconque des revendications précédentes, dans lequel le réducteur d'inversion branché entre l'unité de sommation de puissance et/ou de dérivation de puissance (25) et l'élément de couplage (20) présente au moins deux pistes de roue couplées à l'élément de couplage, dont une piste de roue est réalisée pour entraîner l'élément de couplage par l'unité de sommation de puissance et/ou de dérivation de puissance avec une direction de rotation dans un état de fonctionnement du réducteur d'inversion, et dont l'autre piste de roue est réalisée pour entraîner, dans un autre état de fonctionnement du réducteur d'inversion, l'élément de couplage par l'unité de sommation de puissance et/ou de dérivation de puissance avec une direction de rotation opposée à ladite direction de rotation.

8. Système d'entraînement de direction selon l'une quelconque des revendications précédentes, dans lequel l'unité de sommation de puissance et/ou de dérivation de puissance (25) est réalisée pour coupler dans un premier état de fonctionnement le premier raccord (25a) et le deuxième raccord (25b) au troisième raccord (25c) dans au moins un mode de superposition, en particulier pour coupler dans un deuxième état de fonctionnement le premier raccord (25a) et/ou le deuxième raccord (25b) au troisième raccord (25c) dans au moins un mode de démultiplication fixe, en particulier pour coupler le premier raccord, en particulier au moins dans le cas d'un deuxième raccord sans charge, dans un rapport de démultiplication fixe au troisième raccord, en particulier dans lequel l'unité de sommation de puissance et/ou de dérivation de puissance (25) est réalisée pour fournir dans un troisième état de fonctionnement un mode de fonctionnement mixte entre le premier et le deuxième état de fonctionnement ; et/ou dans lequel l'unité de sommation de puissance et/ou de dérivation de puissance (25) présente un ou plusieurs trains planétaires et/ou un ou plusieurs éléments de commutation, en particulier dans lequel au moins deux trains planétaires et au moins deux éléments de commutation forment le réducteur d'inversion (37) intégré dans l'unité de sommation de puissance et/ou de dérivation de puissance (25), et/ou dans lequel au moins deux pistes de roues, auxquelles respectivement au moins un élément de commutation, en particulier un embrayage, est couplé, forment le réducteur d'inversion branché entre l'unité de sommation de puissance et/ou de dérivation de puissance et l'élément de couplage,/ou dans lequel au moins deux trains planétaires et/ou au moins un élément de commutation participent en fonction de la position de commutation des éléments de commutation à la fourniture des différents états de fonctionnement de l'unité de sommation de puissance et/ou de dérivation de puissance (25).

9. Système d'entraînement de direction selon l'une quelconque des revendications précédentes, dans lequel l'unité de sommation de puissance et/ou de dérivation de puissance (25) présente au moins un train planétaire et/ou en particulier au maximum six trains planétaires, en particulier exactement quatre, cinq, ou six trains planétaires, et/ou dans lequel l'unité de sommation de puissance et/ou de dérivation de puissance (25) présente au moins un élément de commutation, ou au maximum cinq éléments de commutation, en particulier exactement deux, trois, quatre ou cinq éléments de commutation, dans lequel au moins un ou plusieurs éléments de commutation sont réalisés en tant que frein, et/ou dans lequel au moins un ou plusieurs éléments de commutation sont réalisés en tant qu'embrayage, ou dans lequel tous les éléments de commutation sont réalisés en tant que frein ou en tant qu'embrayage.

10. Véhicule à roues directrices,
avec un système d'entraînement de déplacement (10) présentant au moins un organe d'entraînement (12), un réducteur de déplacement (13) et une unité de dérivation de puissance principale (17),
avec un système d'entraînement de direction (11) selon l'une quelconque des revendications précédentes,
dans lequel l'arbre (26) du système d'entraînement de direction (11), auquel est également couplé le premier raccord (25a) de l'unité de sommation de puissance et/ou de dérivation de puissance (25), est couplé à l'unité de dérivation de puissance principale (17), et/ou l'élément de couplage (20) est couplé à des sorties (14, 15) du véhicule.

11. Véhicule à roues directrices selon la revendication précédente,
dans lequel le système d'entraînement de déplacement (10) présente un embrayage commutable (38) qui est réalisé pour accoupler l'au moins un organe d'entraînement (12) à l'unité de dérivation de puissance principale (17) et le découpler de l'unité de dérivation de puissance principale (17) ; et/ou dans lequel le système d'entraînement de déplacement (10) présente au moins une autre machine électrique (39), dans lequel l'au moins une autre machine électrique (39) est mise au point pour assister, lorsque l'au moins une deuxième machine électrique (33) est couplée à l'arbre (26) auquel précisément est également couplé le premier raccord (25a) de l'unité de sommation de puissance et/ou de dérivation de puissance (25a), des fonctions du système d'entraînement de direction (11) fournies par l'au moins une deuxième machine électrique (33) du système d'entraînement de direction (11).

12. Procédé destiné à faire fonctionner un véhicule à roues directrices selon l'une quelconque des revendications 10 à 11,
dans lequel l'au moins une première machine électrique (29) du système d'entraînement de direction (11) fonctionne en tant que moteur,
dans lequel l'au moins une deuxième machine électrique (33) du système d'entraînement de direction (11) fonctionne en tant que générateur,
dans lequel l'énergie électrique fournie par l'au moins une deuxième machine électrique (33) du système d'entraînement de direction (11) est utilisée pour entraîner l'au moins une première machine électrique (29) du système d'entraînement de direction (11),
dans lequel la puissance fournie par l'au moins une première machine électrique (29) du système d'entraînement de direction (11) au deuxième raccord (25b) de l'unité de sommation de puissance et/ou de dérivation de puissance (25) est fournie conjointement avec une deuxième partie de la puissance d'entraînement du système d'entraînement de déplacement (10), que l'unité de dérivation de puissance principale (17) fournit au système d'entraînement de direction (11) et qui est appliquée sur le premier raccord (25a) de l'unité de sommation de puissance et/ou de dérivation de puissance (25), de manière superposée au troisième raccord (25c) de l'unité de sommation de puissance et/ou de dérivation de puissance (25), de préférence
dans lequel, lorsque l'au moins une deuxième machine électrique (33) est couplée à l'arbre (26) auquel précisément est également couplé le premier raccord (25a) de l'unité de sommation de puissance et/ou de dérivation de puissance (25), l'au moins une deuxième machine électrique (33), fonctionnant en tant que générateur, du système d'entraînement de direction (11) convertit une première partie de la puissance d'entraînement du système d'entraînement de déplacement (10), que l'unité de dérivation de puissance principale (17) fournit au système d'entraînement de direction (11), en énergie électrique.

13. Procédé destiné à faire fonctionner un véhicule à roues directrices selon l'une quelconque des revendications 10 à 11, en particulier procédé selon la revendication précédente,
dans lequel, en particulier dans un état de fonctionnement proposé en variante par rapport à un état de fonctionnement, dans lequel l'au moins une première machine électrique fonctionne en tant que générateur et l'au moins une deuxième machine électrique fonctionne en tant que moteur, l'au moins une première machine électrique (29) du système d'entraînement de direction (11) fonctionne en tant que générateur,
l'au moins une deuxième machine électrique (33) du système d'entraînement de direction (11) fonctionne comme moteur, l'unité de sommation de puissance et/ou de dérivation de puissance (25) dérive la puissance d'entraînement du système d'entraînement de déplacement (10), que l'unité de dérivation de puissance principale (17) fournit au système d'entraînement de direction (11) et qui est appliquée sur le premier raccord (25a) de l'unité de sommation de puissance et/ou de dérivation de puissance (25) et la fournit en partie sur le deuxième raccord (25b) de l'unité de sommation de puissance et/ou de dérivation de puissance (25) ainsi qu'en partie sur le troisième raccord (25c) de l'unité de sommation de puissance et/ou de dérivation de puissance (25),
l'au moins une première machine électrique (29) fonctionnant en tant que générateur convertit la partie de la puissance d'entraînement appliquée sur le deuxième raccord (25b) en énergie électrique, et
l'énergie électrique fournie par l'au moins une première machine électrique (29) est utilisée pour entraîner l'au moins une deuxième machine électrique (33) du système d'entraînement de direction (11).

14. Procédé destiné à faire fonctionner un véhicule à roues directrices selon la revendication 10 ou 11, en particulier procédé selon l'une quelconque des revendications 12 à 13, dans lequel, lorsque l'au moins un organe d'entraînement (12) du système d'entraînement de déplacement (10) est arrêté ou est en panne, l'embrayage (38) du système d'entraînement de déplacement est ouvert et l'au moins un organe d'entraînement (12) est découplé de l'unité de dérivation de puissance principale (17),
dans lequel de l'énergie cinétique du véhicule est utilisée pour diriger le véhicule, de préférence
dans lequel, lorsque l'au moins une deuxième machine électrique (33) est couplée à l'arbre (26) auquel précisément est également couplé le premier raccord (25a) de l'unité de sommation de puissance et/ou de dérivation de puissance (25), l'énergie cinétique du véhicule est convertie en énergie électrique par l'intermédiaire de l'au moins une deuxième machine électrique (33) fonctionnant en tant que générateur du système d'entraînement de direction (11), et/ou dans lequel l'énergie cinétique du véhicule est convertie en énergie électrique par l'intermédiaire de l'au moins une autre machine électrique (39).

15. Procédé destiné à faire fonctionner un véhicule à roues directrices selon la revendication 10 ou 11, en particulier procédé selon l'une quelconque des revendications 12 à 13, dans lequel, lorsque l'au moins un organe d'entraînement (12) du système d'entraînement de déplacement (10) est arrêté ou est en panne, l'embrayage (38) du système d'entraînement de déplacement est ouvert et l'au moins un organe d'entraînement (12) est découplé de l'unité de dérivation de puissance principale (17),
dans lequel la première machine électrique (29) du système d'entraînement de direction (11) et, le cas échéant, l'autre machine électrique (39) du système d'entraînement de déplacement (10) et/ou la deuxième machine électrique (33) du système d'entraînement de direction (11) sont utilisées pour entraîner et/ou diriger le véhicule.
